# EUROPÄISCHE PATENTSCHRIFT

(11) **EP 2 766 164 B1**
(45) Veröffentlichungstag und Bekanntmachung des Hinweises auf die Patenterteilung: **16.12.2015**
(21) Anmeldenummer: 12781262.6
(22) Anmeldetag: 12.10.2012
(51) Int. Cl.: B29B 13/10, B29B 17/04, B29C 47/58, B02C 18/08, B01F 15/02, B29B 17/00, B29C 47/00, B29C 47/10, B29C 47/38, B29C 47/40, B29C 47/66, B29K 105/26

(54) **VORRICHTUNG ZUM AUFBEREITEN VON KUNSTSTOFFMATERIAL**
APPARATUS FOR PROCESSING PLASTIC MATERIAL
DISPOSITIF POUR PRÉPARER UNE MATIÈRE PLASTIQUE

(30) Priorität: 14.10.2011 AT 15092011
(43) Veröffentlichungstag der Anmeldung: 20.08.2014
(73) Patentinhaber: EREMA Engineering Recycling Maschinen und Anlagen Gesellschaft m.b.H., 4052 Ansfelden (AT)
(72) Erfinder: FEICHTINGER, Klaus, 4040 Linz (AT); HACKL, Manfred, 4040 Linz-Urfahr (AT)
(74) Vertreter: Wildhack & Jellinek
(86) Internationale Anmeldenummer: PCT/AT2012/050158
(87) Internationale Veröffentlichungsnummer: WO 2013/052986

(56) Entgegenhaltungen:
- EP-A1- 0 735 945
- EP-A1- 0 820 375
- EP-A1- 1 273 412
- US-A- 5 102 326
- KOWALSKA B: "GENUTETE EINZUGSZONEN KONSTRUKTIONSVARIANTEN FUER EINSCHNECKENEXTRUDER", KUNSTOFFE INTERNATIONAL, CARL HANSER VERLAG, MUNCHEN, DE, Bd. 90, Nr. 2, 1. Februar 2000 (2000-02-01), Seiten 34-36,38, XP000936826, ISSN: 0023-5563

## Beschreibung

Die Erfindung betrifft eine Vorrichtung gemäß dem Oberbegriff des Anspruchs 1.

Aus dem Stand der Technik sind zahlreiche ähnliche Vorrichtungen unterschiedlicher Bauart bekannt, umfassend einen Aufnahmebehälter bzw. Schneidverdichter zum Zerkleinern, Erwärmen, Erweichen und Aufbereiten eines zu recycelnden Kunststoffmaterials sowie einen daran angeschlossenen Förderer bzw. Extruder zum Aufschmelzen des derart vorbereiteten Materials. Ziel ist es dabei, ein qualitativ möglichst hochwertiges Endprodukt, zumeist in Form eines Granulates, zu erhalten.

So sind beispielsweise in der EP 123 771 oder der EP 303 929 Vorrichtungen mit einem Aufnahmebehälter und einem daran angeschlossenen Extruder beschrieben, wobei das dem Aufnahmebehälter zugeführte Kunststoffmaterial durch Rotieren der Zerkleinerungs- und Mischwerkzeuge zerkleinert und in Thrombenumlauf gebracht und durch die eingebrachte Energie gleichzeitig erwärmt wird. Dadurch bildet sich eine Mischung mit ausreichend guter thermischer Homogenität aus. Diese Mischung wird nach entsprechender Verweilzeit aus dem Aufnahmebehälter in den Schneckenextruder ausgetragen, gefördert und dabei plastifiziert bzw. aufgeschmolzen. Der Schneckenextruder ist dabei etwa auf der Höhe der Zerkleinerungswerkzeuge angeordnet. Auf diese Weise werden die erweichten Kunststoffteilchen durch die Mischwerkzeuge aktiv in den Extruder gedrückt bzw. gestopft.

Die EP 0735942 B1 offenbart eine Vorrichtung gemäß dem Oberbegriff des Anspruchs 1.

Die meisten dieser seit langem bekannten Vorrichtungen befriedigen nicht im Hinblick auf die am Ausgang der Schnecke erhaltene Qualität des bearbeiteten Kunststoffmateriales und/oder im Hinblick auf den Mengenausstoß der Schnecke. Untersuchungen haben gezeigt, dass die Anforderungen an die dem Behälter nachfolgende Schnecke, zumeist eine Plastifizierschnecke, im Laufe des Betriebes variieren, dass einzelne Partien des zu verarbeitenden Gutes im Mischbehälter länger verweilen als andere Partien und dass einzelne Partien unterschiedliches Verhalten in der Schnecke zeigen. Diese Abweichungen können zurückzuführen sein auf unterschiedliche Beschaffenheit der in den Behälter bzw. in die Schnecke nach und nach eingebrachten Gutpartien, z.B. unterschiedliche Beschaffenheit oder unterschiedliche Stärke des Kunststoffmateriales, z.B. Folienreste usw., aber auch durch unkontrollierbare Zufälligkeiten.

Für thermisch und mechanisch homogenes Material stellt sich üblicherweise eine Qualitätsverbesserung des am Ausgang der Schnecke erhaltenen Gutes ein, wenn die Gangtiefe der Meteringszone der Schnecke sehr groß und die Kompression in der Schnecke sehr gering gehalten wird. Wird jedoch Wert gelegt auf eine Ausstoßerhöhung der Schnecke oder eine Leistungsverbesserung etwa einer Zerreißer-Extruderkombination, dann muss die Schneckendrehzahl angehoben werden, was bedeutet, dass auch die Scherung angehoben wird. Dadurch wird aber das verarbeitete Material von der Schnecke mechanisch und thermisch höher beansprucht, d.h., dass die Gefahr besteht, dass die Molekülketten des Kunststoffmateriales geschädigt werden. Als weiteres Problem kann ein höherer Verschleiß der Schnecke und ihres Gehäuses auftreten, insbesondere bei der Verarbeitung von Recyclingmaterial durch die in diesem Material enthaltenen Verunreinigungen, z.B. abrasive Teilchen, Metallteile usw., welche stark abnützend auf die aneinandergleitenden Metallteile der Schnecke bzw. ihrer Lagerung einwirken. Auch das Einzugsverhalten der Schnecke im Anfangsbereich des Schneckengehäuses ist ein beachtlicher Parameter für die Qualität der Materialbearbeitung in der Schnecke.

Diesen bekannten Vorrichtungen ist weiters gemeinsam, dass die Förder- bzw. Drehrichtung der Misch- und Zerkleinerungswerkzeuge und damit die Richtung, in der die Materialteilchen im Aufnahmebehälter umlaufen, und die Förderrichtung des Förderers, insbesondere eines Extruders, im Wesentlichen gleich bzw. gleichsinnig sind. Diese bewusst so gewählte Anordnung war durch den Wunsch geleitet, das Material möglichst in die Schnecke zu stopfen bzw. diese zwangszufüttern. Dieser Gedanke, die Teilchen in Schneckenförderrichtung in die Förder- bzw. Extruderschnecke zu stopfen, war auch durchaus naheliegend und entsprach den gängigen Vorstellungen des Fachmannes, da die Teilchen dadurch nicht ihre Bewegungsrichtung umkehren müssen und somit keine zusätzliche Kraft für die Richtungsumkehr aufzuwenden ist. Es wurde dabei und bei davon ausgehenden Weiterentwicklungen immer danach getrachtet, eine möglichst hohe Schneckenauffüllung und eine Verstärkung dieses Stopfeffektes zu schaffen. Beispielsweise wurde auch versucht, den Einzugsbereich des Extruders konusartig zu erweitern oder die Zerkleinerungswerkzeuge sichelförmig zu krümmen, damit diese das erweichte Material spachtelartig in die Schnecke füttern können. Durch die zulaufseitige Versetzung des Extruders von einer radialen in eine tangentiale Position zum Behälter, wurde der Stopfeffekt noch weiter verstärkt und das Kunststoffmaterial vom umlaufenden Werkzeug noch stärker in den Extruder hineingefördert bzw. -gedrückt.

Derartige Vorrichtungen sind grundsätzlich funktionsfähig und arbeiten zufriedenstellend, wenngleich auch mit wiederkehrenden Problemen:
So wurde, beispielsweise bei Materialien mit einem geringen Energieinhalt, wie z.B. PET-Fasem oder -folien, oder bei Materialien mit einem frühen Klebrigkeits- oder Erweichungspunkt, wie z.B. Polymilchsäure (PLA), immer wieder der Effekt beobachtet, dass das bewusste gleichsinnige Stopfen des Kunststoffmaterials in den Einzugsbereich des Extruders oder Förderers unter Druck zu einem frühzeitigen Aufschmelzen des Materials unmittelbar nach oder auch im Einzugsbereich des Extruders bzw. der Schnecke führt. Dadurch verringert sich einerseits die Förderwirkung der Schnecke, zudem kann es auch zu einem teilweisen Rückfluss dieser Schmelze in den Bereich des Schneidverdichters bzw. Aufnahmebehälters kommen, was dazu führt, dass sich noch ungeschmolzene Flakes an die Schmelze anhaften, dadurch die Schmelze wieder abkühlt und teilweise erstarrt und sich auf diese Weise ein geschwulstartiges Gebilde bzw. Konglomerat aus teilweise erstarrter Schmelze und festen Kunststoffteilchen bildet. Dadurch verstopft der Einzug und verkleben die Misch- und Zerkleinerungswerkzeuge. In weiterer Folge verringert sich der Durchsatz bzw. Ausstoß des Förderers bzw. Extruders, da keine ausreichende Befüllung der Schnecke mehr vorliegt. Zudem können sich dabei die Misch- und Zerkleinerungswerkzeuge festfahren. In der Regel muss in solchen Fällen die Anlage abgestellt werden und vollständig gesäubert werden.

Außerdem treten Probleme bei solchen Polymermaterialien auf, die im Schneidverdichter bereits bis nahe an ihren Schmelzbereich erwärmt wurden. Wird hierbei der Einzugsbereich überfüllt, schmilzt das Material auf und der Einzug lässt nach.

Auch bei, meist verstreckten, streifigen, faserigen Materialien mit einer gewissen Längenausdehnung und einer geringen Dicke bzw. Steifigkeit, also beispielsweise bei in Streifen geschnittenen Kunststofffolien, ergeben sich Probleme. Dies in erster Linie dadurch, dass sich das längliche Material am ablaufseitigen Ende der Einzugsöffnung der Schnecke festhängt, wobei ein Ende des Streifens in den Aufnahmebehälter ragt und das andere Ende in den Einzugsbereich. Da sowohl die Mischwerkzeuge als auch die Schnecke gleichsinnig laufen bzw. die gleiche Förderrichtungs- und Druckkomponente auf das Material ausüben, werden beide Enden des Streifens in die gleiche Richtung zug- und druckbeaufschlagt und kann sich der Streifen nicht mehr lösen. Dies führt wiederum zu einem Anhäufen des Materials in diesem Bereich, zu einer Verengung des Querschnitts der Einzugsöffnung und zu einem schlechteren Einzugsverhalten und in weiterer Folge zu Durchsatzeinbußen. Außerdem kann es durch den erhöhten Beschickungsdruck in diesem Bereich zu einem Aufschmelzen kommen, wodurch wiederum die eingangs erwähnten Probleme auftreten.

Die vorliegende Erfindung setzt sich damit zur Aufgabe, die erwähnten Nachteile zu überwinden und eine Vorrichtung der eingangs geschilderten Art so zu verbessern, dass das zu fördernde, insbesondere zu extrudierende Material, insbesondere auch empfindliche oder streifenförmige Materialien, möglichst schonend und problemlos von der Schnecke eingezogen und bei hoher Materialqualität, möglichst platzsparend, zeiteffizient und energiesparend und mit hohem Durchsatz verarbeitet bzw. behandelt werden kann.

Diese Aufgabe wird bei einer Vorrichtung der eingangs erwähnten Art durch die kennzeichnenden Merkmale des Anspruchs 1 gelöst.

Dabei ist zunächst vorgesehen, dass die gedachte Verlängerung der zentralen Längsachse des Förderers, insbesondere Extruders, wenn dieser nur eine einzige Schnecke aufweist, oder die Längsachse der der Einzugsöffnung nächstliegenden Schnecke, wenn dieser mehr als eine Schnecke aufweist, entgegen der Förderrichtung des Förderers an der Drehachse ohne diese zu schneiden vorbeiführt, wobei die Längsachse des Förderers, wenn dieser eine einzige Schnecke aufweist, oder die Längsachse der der Einzugsöffnung nächstliegenden Schnecke ablaufseitig zu der zur Längsachse parallelen, von der Drehachse des Misch- und/oder Zerkleinerungswerkzeugs in Förderrichtung des Förderers nach außen gerichteten Radialen des Behälters um einen Abstand versetzt ist.

Damit ist die Förderrichtung der Mischwerkzeuge und die Förderrichtung des Förderers nicht mehr, wie aus dem Stand der Technik bekannt, gleichsinnig, sondern zumindest geringfügig gegensinnig, wodurch der eingangs erwähnte Stopfeffekt verringert wird. Durch die bewusste Umkehrung der Drehrichtung der Misch- und Zerkleinerungswerkzeuge im Vergleich zu bislang bekannten Vorrichtungen, nimmt der Beschickungsdruck auf den Einzugsbereich ab und es verringert sich das Risiko einer Überfüllung. Überschüssiges Material wird auf diese Weise nicht mit übermäßigem Druck in den Einzugsbereich des Förderers gestopft bzw. gespachtelt, sondern im Gegenteil wird überschüssiges Material sogar tendenziell wieder von dort entfernt, sodass zwar immer ausreichend Material im Einzugsbereich vorliegt, jedoch nahezu drucklos bzw. nur mit geringem Druck beaufschlagt wird. Auf diese Weise kann die Schnecke ausreichend befüllt werden und immer ausreichend Material einziehen, ohne dass es zu einer Überfüllung der Schnecke und in weiterer Folge zu lokalen Druckspitzen kommt, bei denen das Material aufschmelzen könnte.

Auf diese Weise wird ein Aufschmelzen des Materials im Bereich des Einzugs verhindert, wodurch sich die betriebliche Effizienz erhöht, die Wartungsintervalle verlängern und die Stehzeiten durch allfällige Reparaturen und Säuberungsmaßnahmen verkürzt werden.

Durch die Verringerung des Beschickungsdruckes reagieren Schieber, mit denen der Befüllungsgrad der Schnecke in bekannter Weise reguliert werden kann, deutlich sensibler und der Füllgrad der Schnecke lässt sich noch genauer einstellen. Insbesondere bei schwereren Materialien, wie etwa Mahlgütern aus High-Density Polyethylen (HDPE) oder PET, lässt sich so leichter der optimale Betriebspunkt der Anlage finden.

Außerdem hat es sich als überraschend vorteilhaft erwiesen, dass Materialien, die schon bis nahe an die Schmelze erweicht wurden, besser bei dem erfindungsgemäßen gegenläufigen Betrieb eingezogen werden. Insbesondere dann, wenn das Material schon in teigigem bzw. erweichtem Zustand vorliegt, schneidet die Schnecke das Material aus dem teigigen Ring, der der Behälterwand naheliegt. Bei einer Drehrichtung in Förderrichtung der Schnecke würde dieser Ring eher weitergeschoben werden und es könnte kein Abschaben durch die Schnecke erfolgen, wodurch der Einzug nachlassen würde. Dies wird durch die erfindungsgemäße Umkehr der Drehrichtung vermieden.

Außerdem können bei der Bearbeitung der oben beschriebenen streifigen bzw. faserigen Materialien die gebildeten Verhängungen bzw. Anhäufungen leichter gelöst werden bzw. werden gar nicht erst ausgebildet, da auf der in Drehrichtung der Mischwerkzeuge ablaufseitigen bzw. stromabwärts gelegenen Kante der Öffnung der Richtungsvektor der Mischwerkzeuge und der Richtungsvektor des Förderers in fast entgegengesetzte oder zumindest geringfügig gegensinnige Richtungen zeigen, wodurch sich ein länglicher Streifen nicht um diese Kante biegen und verhängen kann, sondern von der Mischtrombe im Aufnahmebehälter wieder mitgerissen wird.

Insgesamt verbessert sich durch die erfindungsgemäße Ausgestaltung das Einzugsverhalten und vergrößert sich der Durchsatz deutlich. Das Gesamtsystem aus Schneidverdichter und Förderers wird dadurch stabiler und leistungsfähiger.

Darüber hinaus hat die Anmelderin festgestellt, dass die Länge einer unmittelbar an die Einzugsöffnung anschließenden Tasche eine wesentliche Rolle für die Qualität und den Durchsatz des Materials, insbesondere von unterschiedlichen Materialien oder Materialgemischen, spielt.

Es zeigte sich, dass die Ausbildung einer Tasche in der angegebenen Länge zu einer deutlichen Vergleichsmäßigung des am Ende des Förderers, insbesondere eines Extruders, erhaltenen Materials bzw. der erhaltenen Schmelze führte bzw. dass bei einem Förderer insbesondere bei erhöhtem und schonendem Durchsatz eine unerwünschte Erwärmung oder Erweichung des Materials zumindest im Bereich der Tasche weitgehend hintangehalten werden konnte. Es wird angenommen, dass durch die langgestreckte Tasche ein örtliches Überstopfen der Schnecke vermieden wird, da die Tasche ein Volumen zur Verfügung stellt, dass sowohl das Einziehen von Material in die Schnecke, als auch ein Überstopfen von Material bei überfüllten Gangbereichen wieder vergleichmäßigt wird.

Gemäß einer vorteilhaften Weiterentwicklung der Erfindung ist vorgesehen, dass der Förderer so am Aufnahmebehälter angeordnet ist, dass das Skalarprodukt aus dem tangential zum Flugkreis des radial äußersten Punktes des Misch- und/oder Zerkleinerungswerkzeugs bzw. zum an der Öffnung vorbeistreichenden Kunststoffmaterial und normal zu einer Radialen des Aufnahmebehälters ausgerichteten, in Dreh- bzw. Bewegungsrichtung des Misch- und/oder Zerkleinerungswerkzeugs weisenden Richtungsvektor (Richtungsvektor der Drehrichtung) und dem Richtungsvektor der Förderrichtung des Förderers in jedem einzelnen Punkt bzw. im gesamten Bereich der Öffnung bzw. in jedem einzelnen Punkt bzw. im gesamten Bereich unmittelbar radial vor der Öffnung, null oder negativ ist. Der Bereich unmittelbar radial vor der Öffnung ist als derjenige Bereich vor der Öffnung definiert, bei dem das Material knapp vor dem Durchtritt durch die Öffnung steht, aber noch nicht die Öffnung passiert hat. Auf diese Weise werden die eingangs erwähnten Vorteile erzielt und werden effektiv jegliche durch Stopfeffekte bewirkte Agglomeratbildungen im Bereich der Einzugsöffnung vermieden. Insbesondere kommt es dabei auch nicht auf die räumliche Anordnung der Mischwerkzeuge und der Schnecke zueinander an, beispielsweise muss die Drehachse nicht normal zur Bodenfläche oder zur Längsachse des Förderers bzw. der Schnecke ausgerichtet sein. Der Richtungsvektor der Drehrichtung und der Richtungsvektor der Förderrichtung liegen in einer, vorzugsweise horizontalen, Ebene, bzw. in einer normal zur Drehachse ausgerichteten Ebene.

Eine weitere vorteilhafte Ausgestaltung ergibt sich dadurch, dass der Richtungsvektor der Drehrichtung des Misch- und/oder Zerkleinerungswerkzeugs mit dem Richtungsvektor der Förderrichtung des Förderers einen Winkel von größer oder gleich 90° und kleiner oder gleich 180° einschließt, wobei der Winkel im Schnittpunkt der beiden Richtungsvektoren am stromaufwärts zur Dreh- bzw. Bewegungsrichtung gelegenen Rand der Öffnung gemessen wird, insbesondere im am weitesten stromaufwärts gelegenen Punkt auf diesem Rand bzw. der Öffnung. Dadurch wird derjenige Winkelbereich beschrieben, in dem der Förderer am Aufnahmebehälter angeordnet werden muss, um die vorteilhaften Effekte zu erzielen. Dabei kommt es im gesamten Bereich der Öffnung bzw. in jedem einzelnen Punkt der Öffnung zu einer zumindest geringfügigen gegensinnigen Ausrichtung der auf das Material einwirkenden Kräfte bzw. im Extremfall.zu einer druckneutralen Querausrichtung. In keinem Punkt der Öffnung ist das Skalarprodukt der Richtungsvektoren der Mischwerkzeuge und der Schnecke positiv, nicht einmal in einem Teilbereich der Öffnung tritt somit eine zu große Stopfwirkung auf.

Eine weitere vorteilhafte Ausgestaltung der Erfindung sieht vor, dass der Richtungsvektor der Dreh- bzw. Bewegungsrichtung mit dem Richtungsvektor der Förderrichtung einen Winkel zwischen 170° und 180° einschließt, gemessen im Schnittpunkt der beiden Richtungsvektoren in der Mitte der Öffnung. Eine solche Anordnung trifft beispielsweise zu, wenn der Förderer tangential am Schneidverdichter angeordnet ist.

Um sicherzustellen, dass keine zu große Stopfwirkung auftritt, kann vorteilhafterweise vorgesehen sein, dass der Abstand bzw. die Versetzung der Längsachse zur Radialen größer als oder gleich groß wie der halbe Innendurchmesser des Gehäuses des Förderers bzw. der Schecke ist.

Weiters kann es in diesem Sinne vorteilhaft sein, den Abstand bzw. die Versetzung der Längsachse zur Radialen größer gleich 7 %, noch vorteilhafter größer gleich 20 %, des Radius des Aufnahmebehälters zu bemessen. Bei Förderern mit einem verlängerten Einzugsbereich bzw. einer Nutenbuchse oder erweiterten Tasche kann es vorteilhaft sein, wenn dieser Abstand bzw. diese Versetzung größer als oder gleich groß wie der Radius des Aufnahmebehälters ist. Insbesondere trifft dies für Fälle zu, bei denen der Förderer tangential an den Aufnahmebehälter angeschlossen ist bzw. tangential zum Querschnitt des Behälters verläuft.

Dabei ist insbesondere vorteilhaft, wenn die Längsachse des Förderers bzw. der Schnecke bzw. die Längsachse der der Einzugsöffnung nächstliegenden Schnecke oder die Innenwandung des Gehäuses oder die Umhüllende der Schecke tangential zur Innenseite der Seitenwand des Behälters verläuft, wobei vorzugsweise die Schnecke an ihrer Stirnseite mit einem Antrieb verbunden ist und an ihrem gegenüberliegenden Stirnende zu einer am Stirnende des Gehäuses angeordneten Austrittsöffnung, insbesondere einem Extruderkopf, fördert.

Bei radial versetzt, jedoch nicht tangential angeordneten, Förderern ist vorteilhafterweise vorgesehen, dass die gedachte Verlängerung der Längsachse des Förderers entgegen der Förderrichtung den Innenraum des Aufnahmebehälters zumindest abschnittsweise als Sekante durchsetzt.

Es ist vorteilhaft, wenn vorgesehen ist, dass die Öffnung unmittelbar und direkt und ohne längere Beabstandung oder Übergabestrecke, z.B. einer Förderschnecke, mit der Einzugsöffnung verbunden ist. Damit ist eine effektive und schonende Materialübergabe möglich.

Die Umkehr der Drehrichtung der im Behälter umlaufenden Misch- und Zerkleinerungswerkzeuge kann keinesfalls nur willkürlich oder aus Versehen erfolgen, und man kann - weder bei den bekannten Vorrichtungen noch bei der erfindungsgemäßen Vorrichtung - die Mischwerkzeuge nicht ohne Weiteres in Gegenrichtung rotieren lassen, insbesondere deshalb nicht, da die Misch- und Zerkleinerungswerkzeuge in gewisser Weise asymmetrisch bzw. richtungsorientiert so angeordnet sind, dass sie nur auf eine einzige Seite bzw. in eine Richtung wirken. Würde man eine solche Apparatur bewusst in die falsche Richtung drehen, so würde sich weder eine gute Mischtrombe ausbilden, noch würde das Material ausreichend zerkleinert oder erwärmt werden. Jeder Schneidverdichter hat somit seine fix vorgegebene Drehrichtung der Misch- und Zerkleinerungswerkzeuge.

In diesem Zusammenhang ist es besonders vorteilhaft, wenn vorgesehen ist, dass die auf das Kunststoffmaterial einwirkenden in Dreh- bzw. Bewegungsrichtung weisenden vorderen Bereiche bzw. Vorderkanten der Misch- und/oder Zerkleinerungswerkzeuge unterschiedlich ausgebildet, gekrümmt, angestellt bzw. angeordnet sind im Vergleich zu den in Dreh- bzw. Bewegungsrichtung hinteren bzw. nachlaufenden Bereichen.

Eine vorteilhafte Anordnung sieht dabei vor, dass auf dem Misch- und/oder Zerkleinerungswerkzeug Werkzeuge und/oder Messer angeordnet sind, die in Dreh- bzw. Bewegungsrichtung auf das Kunststoffmaterial erwärmend, zerkleinernd und/oder schneidend einwirken. Die Werkzeuge und/oder Messer können entweder direkt an der Welle befestigt sein oder sind vorzugsweise auf einem, insbesondere parallel zur Bodenfläche, angeordneten drehbaren Werkzeugträger bzw. einer Trägerscheibe angeordnet bzw. darin ausgebildet oder daran, gegebenenfalls einstückig, angeformt.

Grundsätzlich sind die erwähnten Effekte nicht nur bei komprimierenden Extrudern bzw. Agglomeratoren relevant, sondern auch bei nicht oder weniger komprimierenden Förderschnecken. Auch hier werden lokale Überfütterungen vermieden.

Bei einer weiteren besonders vorteilhaften Ausgestaltung ist vorgesehen, dass der Aufnahmebehälter im wesentlichen zylindrisch mit einer ebenen Bodenfläche und einer dazu vertikal ausgerichteten zylindermantelförmigen Seitenwand ist. Konstruktiv einfach ist es weiters, wenn die Drehachse mit der zentralen Mittelachse des Aufnahmebehälters zusammenfällt. Bei einer weiteren vorteilhaften Ausgestaltung ist vorgesehen, dass die Drehachse oder die zentrale Mittelachse des Behälters vertikal und/oder normal zur Bodenfläche ausgerichtet sind. Durch diese besonderen Geometrien wird das Einzugsverhalten bei einer konstruktiv stabilen und einfach aufgebauten Vorrichtung optimiert.

In diesem Zusammenhang ist es auch vorteilhaft, vorzusehen, dass das Misch- und/oder Zerkleinerungswerkzeug, oder, falls mehrere übereinander angeordnete Misch- und/oder Zerkleinerungswerkzeuge vorgesehen sind, das unterste, bodennächste Misch- und/oder Zerkleinerungswerkzeug, sowie die Öffnung in geringem Abstand zur Bodenfläche, insbesondere im Bereich des untersten Viertels der Höhe des Aufnahmebehälters angeordnet sind. Der Abstand wird dabei definiert und gemessen von der untersten Kante der Öffnung bzw. der Einzugsöffnung bis zum Behälterboden im Randbereich des Behälters. Da die Eckkante meist gerundet ausgebildet ist, wird der Abstand von der untersten Kante der Öffnung entlang der gedachten Verlängerungen der Seitenwand nach unten bis zur gedachten Verlängerung des Behälterbodens nach außen gemessen. Gut geeignete Abstände sind 10 bis 400 mm.

Weiters ist es für die Bearbeitung vorteilhaft, wenn die radial äußersten Kanten der Misch- und/oder Zerkleinerungswerkzeuge bis dicht an die Seitenwand heranreichen.

Der Behälter muss nicht unbedingt eine kreiszylindrische Form aufweisen, wenngleich diese Form aus praktischen und fertigungstechnischen Gründen vorteilhaft ist. Von der Kreiszylinderform abweichende Behälterformen, etwa kegelstumpfförmige Behälter oder zylindrische Behälter mit elliptischem oder ovalem Grundriss, müssen auf einen kreiszylindrischen Behälter gleichen Fassungsvolumens umgerechnet werden, unter der Annahme, dass die Höhe dieses fiktiven Behälters gleich dessen Durchmesser ist. Behälterhöhen, die hierbei die sich einstellende Mischtrombe (unter Berücksichtigung des Sicherheitsabstandes) wesentlich übersteigen, bleiben unberücksichtigt, da diese übermäßige Behälterhöhe nicht genutzt wird und daher auf die Materialverarbeitung keinen Einfluss mehr hat.

Unter dem Begriff Förderer werden vorliegend sowohl Anlagen mit nicht komprimierenden oder dekomprimierenden Schnecken, also reine Förderschnecken, als auch Anlagen mit komprimierenden Schnecken, also Extruderschnecken mit agglomerierender oder plastifizierender Wirkung, verstanden.

Unter den Begriffen Extruder bzw. Extruderschnecke werden in vorliegendem Text sowohl Extruder bzw. Schnecken verstanden, mit denen das Material vollständig oder teilweise aufgeschmolzen wird, als auch Extruder, mit denen das erweichte Material nur agglomeriert, jedoch nicht aufgeschmolzen wird. Bei Agglomerierschnecken wird das Material nur kurzzeitig stark komprimiert und geschert, nicht aber plastifiziert. Die Agglomerierschnecke liefert daher an ihrem Ausgang Material, welches nicht vollkommen geschmolzen ist, sondern von nur an ihrer Oberfläche angeschmolzenen Teilchen besteht, die gleichsam einer Sinterung zusammengebackt sind. In beiden Fällen wird jedoch über die Schnecke Druck auf das Material ausgeübt und dieses verdichtet.

Das Einzugsverhalten, der Durchsatz und die Materialqualität werden vorteilhaft beeinflusst, wenn im Gehäuse im Bereich der Einzugsöffnung eine weitere Tasche ausgebildet ist. Für die Vergleichmäßigung der Materialqualität, allenfalls bei erhöhtem Durchsatz, trägt bei, wenn in der Tasche und gegebenenfalls in der weiteren Tasche zumindest ein den Materialfluss in Förderrichtung unterstützendes Stauelement in Form einer Rippe oder eines Schiebers oder einer Wandnut, angeordnet bzw. ausgebildet ist bzw. in die Tasche ragt bzw. die Tasche begrenzt, um das Material in die Schneckengänge einzubringen.

Für die Förderleistung ist es vorteilhaft, wenn sich das Stauelement über die gesamte Länge der Tasche oder über die gesamte Länge der weiteren Tasche erstreckt. Eine materialschonende Förderung wird unterstützt, wenn die Länge des jeweiligen Stauelements in der Tasche 60 bis 100% von L %, vorzugsweise 75% bis 100%, von L der Länge der Tasche beträgt, wobei L 0,8 bis 9 D, vorzugsweise 1 bis 7 D, beträgt und das Stauelement an dem in Förderrichtung der Schnecke stromabwärts gelegenen Rand der Einzugsöffnung oder dem am weitesten stromabwärts gelegenen Punkt der Einzugsöffnung beginnt.
Je nach Art des zu behandelnden Materials und der gewünschten Behandlung, insbesondere in einem Extruder, kann vorgesehen sein, dass die Innenwandfläche des Wandabschnittes zylindrisch ausgebildet ist oder sich in Förderrichtung, insbesondere konisch, verengt und/oder dass der Abstand zwischen der Rippe oder dem Schieber von der Hüllkurve der Schnecke in der Tasche und/oder in der weiteren Tasche konstant ist, oder dass sich der Abstand der Rippe oder des Schiebers von der Hüllkurve der Schnecke in der Tasche und/oder in der weiteren Tasche verändert, insbesondere in Förderrichtung abnimmt.
Es kann mit unterschiedlichen Materialien allenfalls von Vorteil sein, wenn sich das jeweilige Stauelement in Förderrichtung parallel zur Achse der Schnecke gerade erstreckt oder in Form einer Windung die Schnecke längs ihres Umfanges umgibt, wobei die Steigung der Windung größer ist als die Steigung der Schnecke und/oder wenn die Rippe oder der Schieber sich radial in das Gehäuse hinein erstreckt und/oder wenn zumindest eines der in der weiteren Tasche des Wandabschnittes vorgesehenen Stauelemente in die Tasche hinein verlängert ist.

Als Stauelemente kommen vor allem Rippen oder Schieber oder auch Vertiefungen, z.B. Nuten, in der Innenwand des Gehäuses in Frage. Rippen oder Schieber sind gleichwirkend. Der einzige Unterschied zwischen einer Rippe und einem Schieber besteht darin, dass der Schieber im Betrieb der Vorrichtung allenfalls verstellt werden kann und damit die Vorrichtung an unterschiedliche zu bearbeitende oder zu fördernde Materien angepasst werden kann. Alle Stauelemente besitzen eine Richtungskomponente in Förderrichtung.

Für den Aufbau des Gehäuses kann es vorteilhaft sein, wenn der Innenquerschnitt der weiteren Tasche dem Querschnitt der Tasche im Punkt bzw. beim strömungsabwärtigen Rand der Einzugsöffnung entspricht. Ein einfacher Aufbau des Gehäuses bei erhöhter Anpassbarkeit an unterschiedliche Materialien ergibt sich, wenn der die Tasche ausbildende Wandabschnitt des Gehäuses als in das Gehäuse austauschbar einsetzbarer, vorzugsweise die Länge L besitzender, Gehäuseteil ausgebildet ist oder wenn die Tasche in einer, vorzugsweise die Länge L besitzenden, Buchse ausgebildet ist, die in das Gehäuse austauschbar einsetzbar ist.

Es zeigte sich, dass es vorteilhaft ist, wenn die Anzahl der Stauelemente im Wandabschnitt und damit auch die Anzahl der Taschen A = d/K beträgt, wobei d der Durchmesser der Schnecke gemessen in mm und K ein Wert im Bereich von 10 bis 110, insbesondere von 15 bis 90, sind. Damit kann die Anzahl der Stauelemente an gewünschte Durchmesser der Schnecke angepasst werden. Unter dem Durchmesser D versteht man durchwegs den mittleren Durchmesser der Hüllkurve der Schnecke bzw. des Innendurchmessers des Gehäuses, sofern dieses der Schnecke angenähert ist.

Es ist des Weiteren für die erfindungsgemäße Vorrichtung von Vorteil, wenn das Füllvolumen der Tasche pro Längeneinheit V = k Vs beträgt, wobei k ein Wert im Bereich von 0,025 bis 2, vorzugsweise von 0,05 bis 1,5, ist und Vs das Füllvolumen der Schnecke pro Längeneinheit ist. Auch damit kann die Materialqualität am Ende eines Extruders positiv beeinflusst werden.

Als zweckmäßig hat es sich erwiesen, wenn der Steigungswinkel der Stauelemente bezüglich der Förderrichtung 0° bis 75° beträgt. Wenn das Stauelement einen Winkel von 0° zur Förderrichtung einschließt, erstreckt es sich parallel zur Förderrichtung.

Von Vorteil ist es, wenn die Schnecke eine Extruderschnecke mit konstantem Kerndurchmesser zumindest im Bereich der Tasche und/oder der weiteren Tasche ist.

In vorteilhafter Weise ist bei der erfindungsgemäßen Vorrichtung vorgesehen, dass die Schnecke zumindest im Bereich der Tasche eine Extruderschnecke mit konstantem Kerndurchmesser ist.

Für die Bearbeitung von unterschiedlichen Materialien kann es zweckmäßig sein, wenn zumindest ein Teilabschnitt des die Tasche umfassenden Wandabschnittes mit einer Kühleinheit versehen ist, wobei vorteilhafterweise ein das Gehäuse umgebender Kühlmantel und/oder Kühlkanäle in der Wand des Gehäuses vorgesehen sind, um erforderliche Temperaturen in der Tasche einstellen zu können. Als Kühlmedien können flüssige oder gasförmige Medien zum Einsatz kommen.

Weitere Merkmale und Vorteile der Erfindung ergeben sich aus der Beschreibung der folgenden nicht einschränkend zu verstehenden Ausführungsbeispiele des Erfindungsgegenstandes, welche in den Zeichnungen schematisch und nicht maßstabsgetreu dargestellt sind:
Fig. 1 zeigt einen Vertikalschnitt durch eine erfindungsgemäße Vorrichtung mit etwa tangential angeschlossenem Extruder.
Fig. 2 zeigt einen Horizontalschnitt durch die Ausführungsform von Fig. 1.
Fig. 3 zeigt eine weitere Ausführungsform mit minimaler Versetzung.
Fig. 4 zeigt eine weitere Ausführungsform mit größerer Versetzung.
Fig. 5 bis 8 zeigen Ausführungsformen mit Taschen in dem Gehäuse der Schnecke

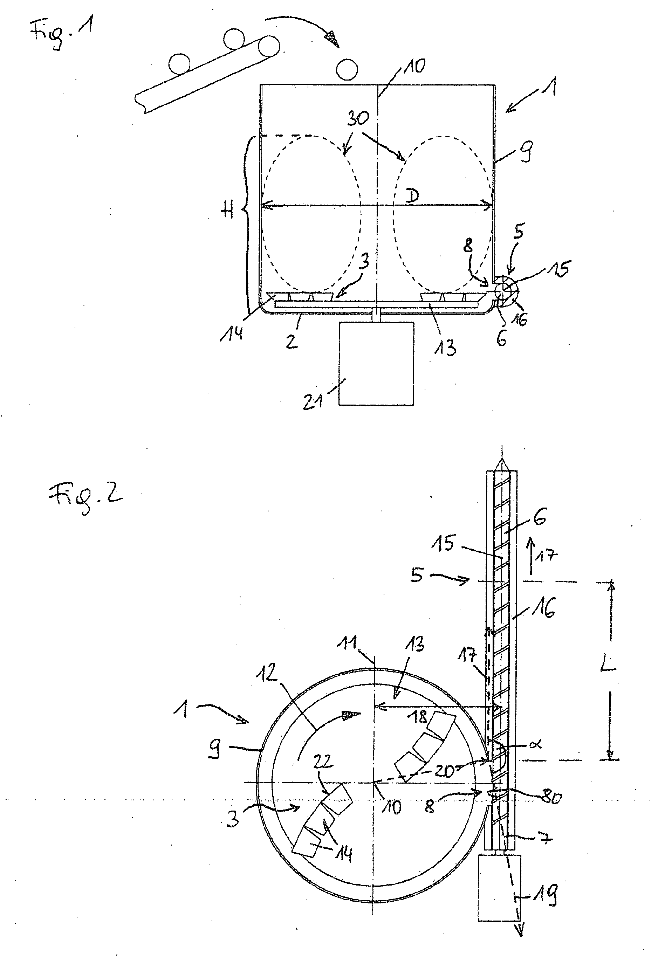

Bei den in den Figuren beschriebenen Beispielen sind durchwegs Förderer mit einer einzigen Schnecke, beispielsweise Einwellen- bzw. Einschneckenextruder, dargestellt. Alternativ ist jedoch auch die Vorsehung von Förderern mit mehr als einer Schnecke, beispielsweise Doppel- oder Mehrwellenförderer oder -extruder, insbesondere mit mehreren identischen Schnecken, die zumindest gleiche Durchmesser d aufweisen, möglich. Zu bemerken ist ferner, dass die Umdrehungsrichtung der Schnecke nicht relevant ist; die Schnecke kann sich in oder gegen den Uhrzeigersinn drehen. Die Fig. 1 bis 4 erläutern vor allem die Drehrichtung der Werkzeuge in Bezug auf die Förderrichtung der Schnecke.

Weder die Behälter, noch die Schnecken oder die Mischwerkzeuge sind in den Zeichnungen maßstäblich, weder als solche, noch im Verhältnis zueinander. So sind z.B. in Wirklichkeit die Behälter meist größer oder die Schnecken länger, als hier dargestellt.

Die in Fig. 1 und Fig. 2 dargestellte vorteilhafte Schneidverdichter-Extruder-Kombination zum Aufbereiten bzw. Recyclieren von Kunststoffmaterial weist einen kreiszylindrischen Behälter bzw. Schneidverdichter bzw. Zerreißer 1 mit einer ebenen, horizontalen Bodenfläche 2 und einer normal dazu ausgerichteten, vertikalen, zylindermantelförmigen Seitenwand 9 auf.

In geringem Abstand zur Bodenfläche 2, maximal in etwa 10 bis 20 %, gegebenenfalls weniger, der Höhe der Seitenwand 9 - gemessen von der Bodenfläche 2 zum obersten Rand der Seitenwand 9 - ist eine parallel zur Bodenfläche 2 ausgerichtete, ebene Trägerscheibe bzw. ein Werkzeugträger 13 angeordnet, die/der um eine zentrale Drehachse 10, die gleichzeitig die zentrale Mittelachse des Behälters 1 ist, in die mit einem Pfeil 12 markierte Dreh- bzw. Bewegungsrichtung 12 drehbar ist. Die Trägerscheibe 13 ist über einen Motor 21 angetrieben, der sich unterhalb des Behälters 1 befindet. Auf der Oberseite der Trägerscheibe 13 sind Messer bzw. Werkzeuge, z.B. Schneidmesser, 14 angeordnet, die gemeinsam mit der Trägerscheibe 13 das Misch- und/oder Zerkleinerungswerkzeug 3 bilden.

Wie schematisch angedeutet, sind die Messer 14 auf der Trägerscheibe 13 nicht symmetrisch angeordnet, sondern sind auf ihren in die Dreh- bzw. Bewegungsrichtung 12 weisenden vorderen Kanten 22 besonders ausgebildet, angestellt bzw. angeordnet, um auf das Kunststoffmaterial mechanisch spezifisch einwirken zu können. Die radial äußersten Kanten der Misch- und Zerkleinerungswerkzeuge 3 reichen bis relativ nahe, etwa 5 % des Radius 11 des Behälters 1, an die Innenfläche der Seitenwand 9 heran.

Der Behälter 1 besitzt oben eine Einfüllöffnung, durch die das zu verarbeitende Gut, z.B. Portionen aus Kunststofffolien, z.B. mittels einer Fördereinrichtung in Richtung des Pfeils eingeworfen wird. Alternativ kann vorgesehen sein, dass der Behälter 1 geschlossen und zumindest auf ein technisches Vakuum evakuierbar ist, wobei das Material über ein Schleusensystemen eingebracht wird. Dieses Gut wird von den umlaufenden Misch- und/oder Zerkleinerungswerkzeugen 3 erfasst und in Form einer Mischtrombe 30 hochgewirbelt, wobei das Gut entlang der vertikalen Seitenwand 9 hochsteigt und annähernd im Bereich der wirksamen Behälterhöhe H durch Schwerkrafteinwirkung wieder nach innen und unten in den Bereich der Behältermitte zurückfällt. Die wirksame Höhe H des Behälters 1 ist annähernd gleich seinem Innendurchmesser D. Im Behälter 1 bildet sich also eine Mischtrombe aus, bei der das Material sowohl von oben nach unten als auch in Drehrichtung 12 herumgewirbelt wird. Eine solche Vorrichtung kann somit aufgrund der besonderen Anordnung der Misch- und Zerkleinerungswerkzeuge 3 bzw. der Messer 14 nur mit der vorgegebenen Dreh- bzw. Bewegungsrichtung 12 betrieben werden und die Drehrichtung 12 kann nicht ohne Weiteres oder ohne zusätzliche Änderungen vorzunehmen, umgedreht werden.

Das eingebrachte Kunststoffmaterial wird von den umlaufenden Misch- und Zerkleinerungswerkzeugen 3 zerkleinert, gemischt und dabei über die eingebrachte mechanische Reibungsenergie erwärmt und erweicht, jedoch nicht aufgeschmolzen. Nach einer gewissen Verweilzeit im Behälter 1 wird das homogenisierte, erweichte, teigige aber nicht geschmolzene Material, wie im Folgenden im Detail erörtert wird, durch eine Öffnung 8 aus dem Behälter 1 ausgebracht, in den Einzugsbereich eines Extruders 5 gebracht und dort von einer Schnecke 6 erfasst und in weiterer Folge aufgeschmolzen.

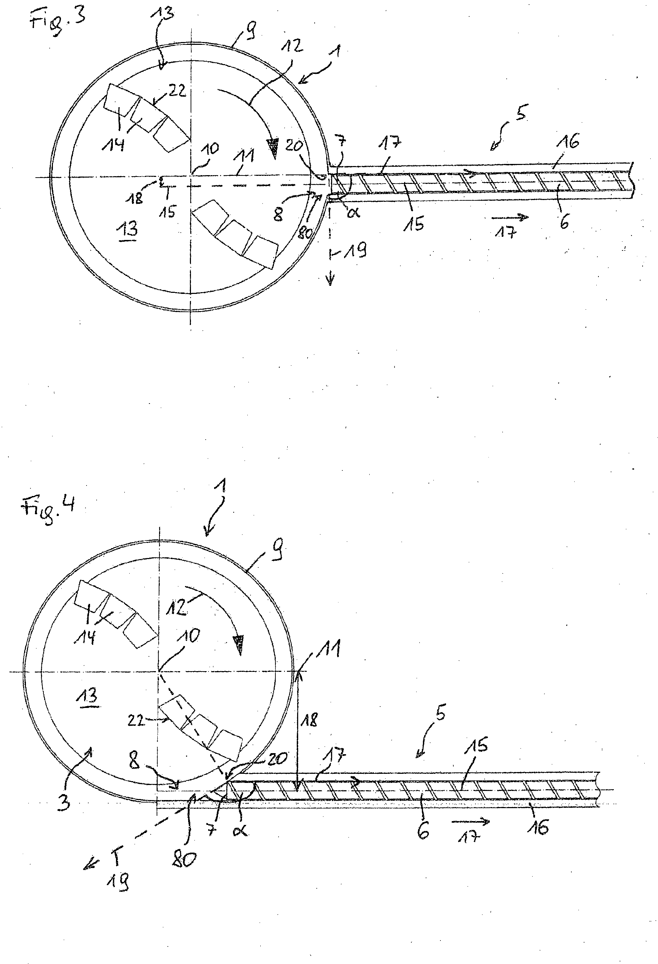

Auf der Höhe des im vorliegenden Fall einzigen Zerkleinerungs- und Mischwerkzeugs 3 ist in der Seitenwand 9 des Behälters 1 die besagte Öffnung 8 ausgebildet, durch die das vorbehandelte Kunststoffmaterial aus dem Inneren des Behälters 1 ausbringbar ist. Das Material wird an einen tangential am Behälter 1 angeordneten Einschnecken-Extruder 5 übergeben, wobei das Gehäuse 16 des Extruders 5 eine in seiner Mantelwand liegende Einzugsöffnung 80 für das von der Schnecke 6 zu erfassende Material aufweist. Eine solche Ausführungsform hat den Vorteil, dass die Schnecke 6 vom in der Zeichnung unteren Stirnende her durch einen nur schematisch dargestellten Antrieb angetrieben werden kann, sodass das in der Zeichnung obere Stirnende der Schnecke 6 vom Antrieb freigehalten werden kann. Dies ermöglicht es, die Austrittsöffnung für das von der Schnecke 6 geförderte, plastifizierte oder agglomerierte Kunststoffmaterial an diesem rechten Stirnende anzuordnen, z.B. in Form eines nicht dargestellten Extruderkopfes. Das Kunststoffmaterial kann daher ohne Umlenkung von der Schnecke 6 durch die Austrittsöffnung gefördert werden, was bei den Ausführungsformen nach den Figuren 3 und 4 nicht ohne weiteres möglich ist.

Die Einzugsöffnung 80 steht mit der Öffnung 8 in Materialförder- bzw. übergabeverbindung und ist im vorliegenden Fall direkt, unmittelbar und ohne längeres Zwischenstück oder Beabstandung mit der Öffnung 8 verbunden. Lediglich ein sehr kurzer Übergabebereich ist vorgesehen.

Im Gehäuse 16 ist eine komprimierende Schnecke 6 um ihre Längsachse 15 drehbar gelagert. Die Längsachse 15 der Schnecke 6 und des Extruders 5 fallen zusammen. Der Extruder 5 fördert das Material in Richtung des Pfeils 17. Der Extruder 5 ist ein an sich bekannter, herkömmlicher Extruder, bei dem das erweichte Kunststoffmaterial komprimiert und dadurch aufgeschmolzen wird, und die Schmelze dann auf der gegenüberliegenden Seite am Extruderkopf austritt.

Die Misch- und/oder Zerkleinerungswerkzeuge 3 bzw. die Messer 14 liegen auf nahezu derselben Höhe bzw. Ebene wie die zentrale Längsachse 15 des Extruders 5. Die äußersten Enden der Messer 14 sind ausreichend von den Stegen der Schnecke 6 beabstandet.

Bei der Ausführungsform gemäß Fig. 1 und 2 ist der Extruder 5, wie erwähnt, tangential an den Behälter 1 angeschlossen bzw. verläuft tangential zu dessen Querschnitt. Die gedachte Verlängerung der zentralen Längsachse 15 des Extruders 5 bzw. der Schnecke 6 entgegen der Förderrichtung 17 des Extruders 5 nach hinten, führt in der Zeichnung neben der Drehachse 10 vorbei, ohne diese zu schneiden. Die Längsachse 15 des Extruders 5 bzw. der Schnecke 6 ist ablaufseitig zu der zur Längsachse 15 parallelen, von der Drehachse 10 des Misch- und/oder Zerkleinerungswerkzeugs 3 in Förderrichtung 17 des Extruders 5 nach außen gerichteten Radialen 11 des Behälters 1 um einen Abstand 18 versetzt. Im vorliegenden Fall durchsetzt die nach hinten gedachte Verlängerung der Längsachse 15 des Extruders 5 den Innenraum des Behälters 1 nicht, sondern läuft knapp daneben vorbei.

Der Abstand 18 ist etwas größer als der Radius des Behälters 1. Der Extruder 5 ist damit geringfügig nach außen versetzt bzw. der Einzugsbereich ist etwas tiefer.

Unter den Begriffen "entgegengerichtet", "gegenläufig" oder "gegensinnig" wird hier jegliche Ausrichtung der Vektoren zueinander verstanden, die nicht spitzwinkelig ist, wie im folgenden im Detail erläutert wird.

Anders ausgedrückt, ist das Skalarprodukt aus einem Richtungsvektor 19 der Drehrichtung 12, der tangential zum Flugkreis des äußersten Punktes des Misch- und/oder Zerkleinerungswerkzeugs 3 bzw. tangential zum an der Öffnung 8 vorbeistreichenden Kunststoffmaterial ausgerichtet ist und der in Dreh- bzw. Bewegungsrichtung 12 der Misch- und/oder Zerkleinerungswerkzeuge 3 weist, und einem Richtungsvektor 17 der Förderrichtung des Extruders 5, der in Förderichtung parallel zur zentralen Längsachse 15 verläuft, in jedem einzelnen Punkt der Öffnung 8 bzw. im Bereich radial unmittelbar vor der Öffnung 8, überall null oder negativ, nirgendwo jedoch positiv.

Bei der Einzugsöffnung in Fig. 1 und 2 ist das Skalarprodukt aus dem Richtungsvektor 19 der Drehrichtung 12 und dem Richtungsvektor 17 der Förderrichtung in jedem Punkt der Öffnung 8 negativ.

Der Winkel α zwischen dem Richtungsvektor 17 der Förderrichtung und dem Richtungsvektor der Drehrichtung 19, gemessen im am weitesten stromaufwärts zur Drehrichtung 12 gelegenen Punkt 20 der Öffnung 8 bzw. am am weitesten stromaufwärts gelegenen Rand der Öffnung 8, beträgt, nahezu maximal, etwa 160°.

Schreitet man entlang der Öffnung 8 nach links, also in Drehrichtung 12, weiter, so wird der stumpfe Winkel α immer größer. In der Mitte der Öffnung 8 ist der Winkel zwischen den Richtungsvektoren etwa 180° und das Skalarprodukt maximal negativ, weiter links davon wird der Winkel sogar > 180° und das Skalarprodukt nimmt wieder etwas ab, bleibt aber immer negativ.

Ein in Fig. 2 nicht eingezeichneter, in der Mitte bzw. im Zentrum der Öffnung 8 gemessener Winkel β zwischen dem Richtungsvektor der Drehrichtung 19 und dem Richtungsvektor der Förderrichtung 17 beträgt etwa 175°.

Die Vorrichtung gemäß Fig. 2 stellt den ersten Grenzfall bzw. Extremwert dar. Bei einer solchen Anordnung ist eine sehr schonende Stopfwirkung bzw. eine besonders vorteilhafte Fütterung möglich und ist eine solche Vorrichtung insbesondere für sensible Materialien, die nahe dem Schmelzbereich bearbeitet werden oder für langstreifiges Gut vorteilhaft.

In Fig. 3 ist eine alternative Ausführungsform gezeigt, bei der der Extruder 5 nicht tangential, sondern mit seiner Stirnseite 7 an den Behälter 1 angeschlossen ist. Die Schnecke 6 und das Gehäuse 16 des Extruders 5 sind im Bereich der Öffnung 8 an die Kontur der Innenwand des Behälters 1 angepasst und bündig zurückversetzt. Kein Teil des Extruders 5 ragt durch die Öffnung 8 hindurch in den Innenraum des Behälters 1 hinein.

Der Abstand 18 entspricht hier etwa 15 bis 20 % des Radius 11 des Behälters 1 und etwa dem halben Innendurchmesser d des Gehäuses 16. Diese Ausführungsfrom stellt somit den zweiten Grenzfall bzw. Extremwert mit kleinstmöglichem Versatz bzw. Abstand 18 dar, bei dem die Dreh- bzw. Bewegungsrichtung 12 der Misch- und/oder Zerkleinerungswerkzeuge 3 der Förderrichtung 17 des Extruders 5 zumindest geringfügig entgegengerichtet ist und zwar über die gesamte Fläche der Öffnung 8.

Das Skalarprodukt ist in Fig. 3 in demjenigen grenzwertigen, am weitesten stromaufwärts gelegenen, Punkt 20 genau null, der am, am weitesten stromaufwärts gelegenen, Rand der Öffnung 8 liegt. Der Winkel α zwischen dem Richtungsvektor 17 der Förderrichtung und dem Richtungsvektor der Drehrichtung 19 ist, gemessen in Punkt 20 von Fig. 3, genau 90°. Schreitet man entlang der Öffnung 8 nach links, also in Drehrichtung 12, weiter, so wird der Winkel α immer größer und zu einem stumpfen Winkel > 30° und das Skalarprodukt wird gleichzeitig negativ. An keinem Punkt oder in keinem Bereich der Öffnung 8 ist das Skalaprodukt jedoch positiv oder der Winkel α kleiner als 90°. Dadurch kann nicht einmal in einem Teilbereich der Öffnung 8 eine lokale Überfütterung erfolgen bzw. kann es in keinem Bereich der Öffnung 8 zu einer schädlichen überhöhten Stopfwirkung kommen.

Darin besteht auch ein entscheidender Unterschied zu einer rein radialen Anordnung, da der Punkt 20 bzw. die Kante 20' bei einer radialen Anordnung des Extruders 5 einen Winkel α < 90° aufweisen würde und diejenigen Bereiche der Öffnung 8, die in der Zeichnung rechts neben der Radialen 11 bzw. stromaufwärts bzw. zulaufseitig davon gelegen sind, hätten ein positives Skalarprodukt. Damit könnte sich in diesen Bereichen lokal aufgeschmolzenes Kunststoffgut ansammeln.

In Fig. 4 ist eine weitere alternative Ausführungsform dargestellt, bei der der Extruder 5 ablaufseitig etwas weiter versetzt ist als bei Fig. 3, jedoch noch nicht tangential wie in Fig. 1 und 2. Im vorliegenden Fall, wie auch bei Fig. 3, durchsetzt die nach hinten gedachte Verlängerung der Längsachse 15 des Extruders 5 den Innenraum des Behälters 1 sekantenartig. Dies hat zur Folge, dass - gemessen in Umfangsrichtung des Behälters 1 - die Öffnung 8 breiter ist als bei der Ausführungsform nach Fig. 3. Auch der Abstand 18 ist entsprechend größer als bei Fig. 3, jedoch kleiner als der Radius 11. Der Winkel α gemessen in Punkt 20 beträgt etwa 150°, wodurch gegenüber der Vorrichtung von Fig. 3 die Stopfwirkung verringert wird, was für gewisse sensible Polymere vorteilhafter ist. Der vom Behälter 1 aus gesehene rechte innere Rand bzw. die Innenwandung des Gehäuses 16 schließt tangential an den Behälter 1 an, wodurch im Unterschied zu Fig. 3 keine stumpfe Übergangskante ausgebildet ist. In diesem strömungsabwärtigsten Punkt der Öffnung 8, in Fig. 4 ganz links, ist der Winkel etwa 180°.

Anhand der Fig. 1 bis 4 wurden die wesentlichen Eigenschaften und Vorteile der Drehrichtung des Mischwerkzeuges bezüglich der Förderrichtung 17 der Schnecke 6 erörtert, die mit der Förderung und Bearbeitung des Materials in der Schnecke 6 unmittelbar nach dem Materialeinzug strömungsabwärts der Einzugsöffnung eng zusammen wirken. Die Drehrichtung der Mischwerkzeuge und die spezielle Ausbildung eines Wandabschnittes 105 des Gehäuses 16 der Schnecke 6 bieten wesentliche Vorteile.

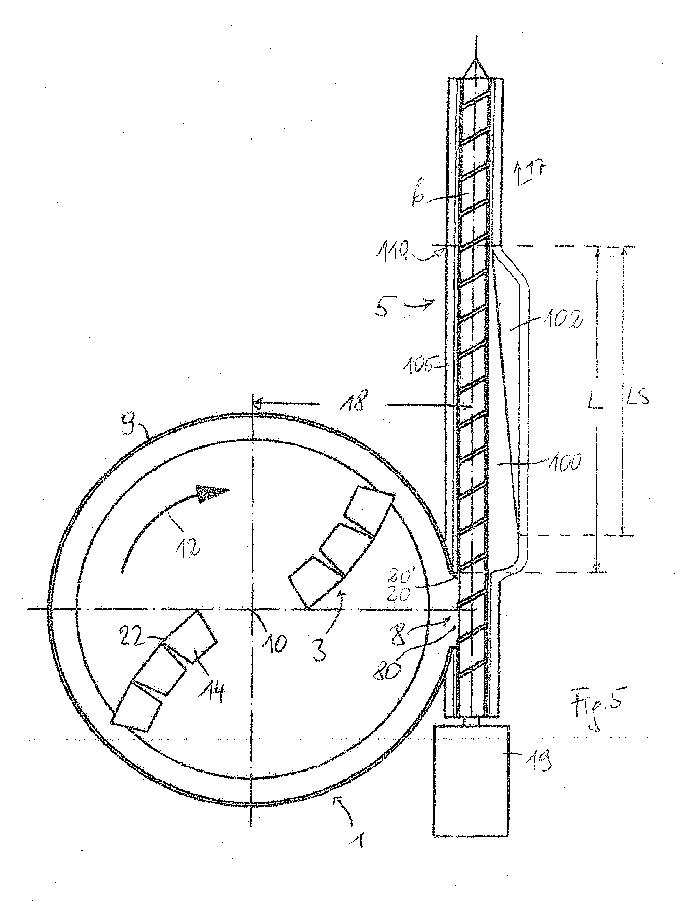

Gemäß Fig. 5 bis 8 schließt an die Einzugsöffnung 80 ein Wandabschnitt 105 über eine Länge L an. In dem an die Einzugsöffnung 80 in Förderrichtung 17 unmittelbar anschließende Wandabschnitt 105 des Gehäuses 16, der die Schnecke 6 vollständig umgibt, ist eine Tasche 100 ausgebildet, die sich in Förderrichtung 17 von dem - in Förderrichtung 17 gesehen - am meisten strömungsabwärts gelegenen Punkt 20 bzw. Rand 20' der Einzugsöffnung 80 über eine Länge L von 0,8 d ≤ L ≤ 9 d, vorzugsweise 1 d ≤ L ≤ 7 d, erstreckt, wobei d der Durchmesser der Schnecke 6 im Wandabschnitt 105 ist.

Der in den Fig. 5 bis 8 dargestellte Behälter 1 und sein Anschluss an das Gehäuse 16 entsprechen dem Behälter und dem Anschluss so wie sie in den Fig. 5 bis 8 dargestellt sind.

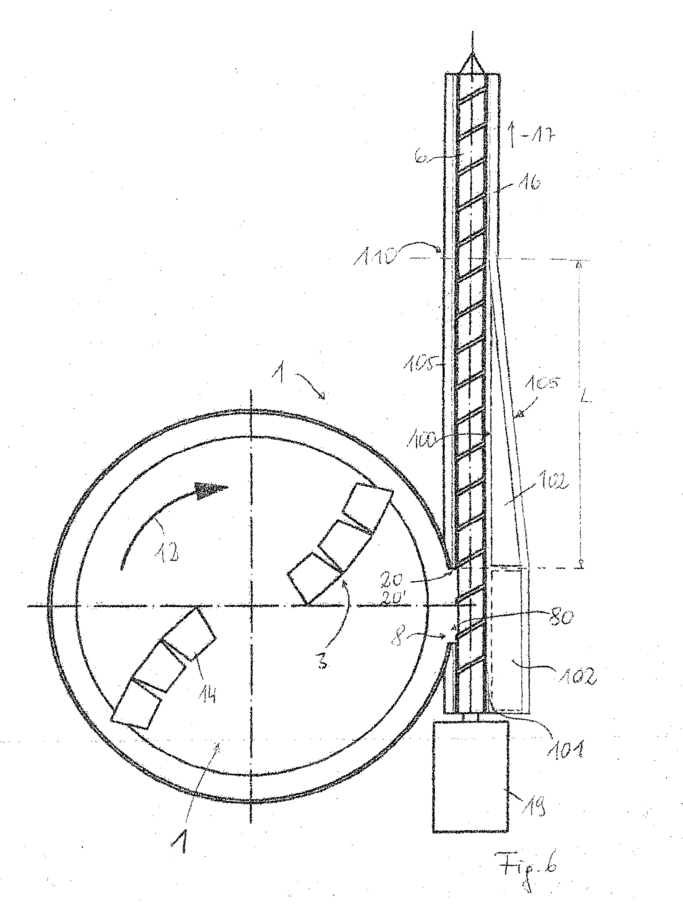

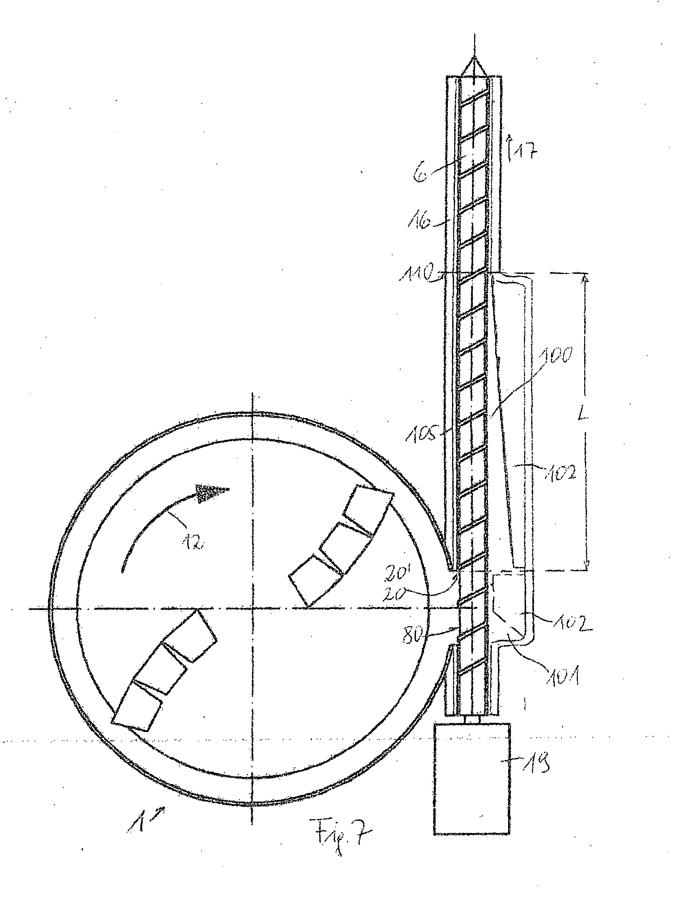

Diese Tasche 100 verbessert das schonende Eindringen des vom Behälter 3 zugeführten Materials und leitet dieses Material in schonender Weise in die Gänge der Schnecke 6. Wie in Fig. 6 dargestellt, kann auch im Bereich der Einzugsöffnung 80 und den sich an die Einzugsöffnung 80 entgegen die Förderrichtung 17 anschließenden Bereich eine weitere Tasche 101 erstrecken, so wie diese in Fig. 6 dargestellt ist. Es ist allerdings auch möglich, dass sich lediglich vor der Einzugsöffnung 80 ein in dem Gehäuse 16 ausgebildeter Wandabschnitt mit einer weiteren Tasche 101 erstreckt, wie dies in Fig. 7 dargestellt ist.

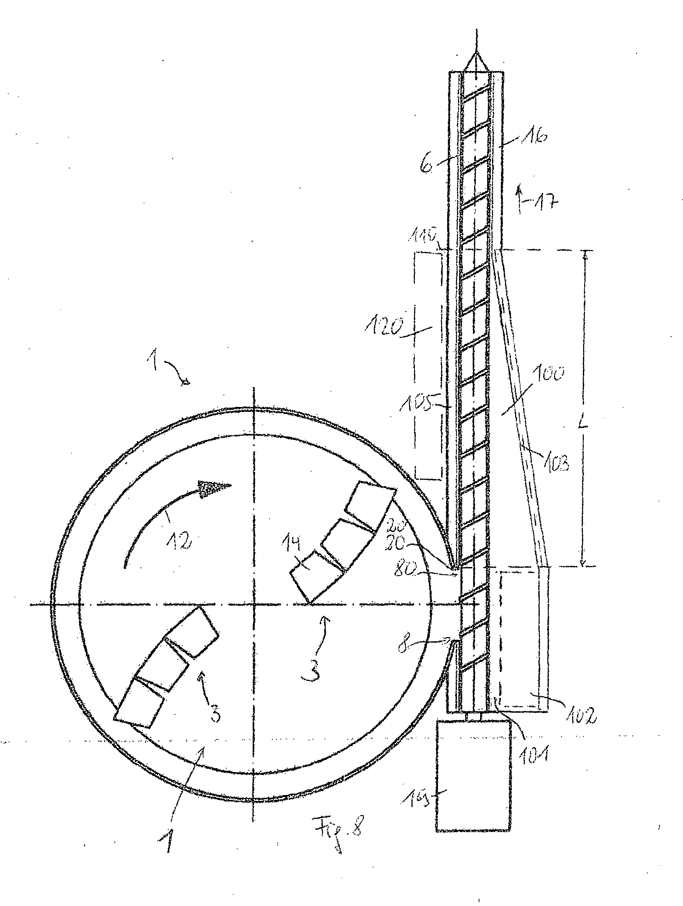

Es ist nunmehr vorgesehen, dass sich in dem Wandabschnitt 105 in der Tasche 100 von der Innenwandung des Gehäuses 16 in Richtung auf die Schnecke 6 zu, Rippen oder Stege 102 erstrecken. Anstelle dieser Rippen oder Stege 102 können auch gleiche Wirkung zeigende Schieber vorgesehen werden. Diese Stauelemente bewirken eine Zufuhr des Materials, das sich in der Tasche befindet, zur Schnecke. Auch Nuten 103 oder vergleichbare Vertiefungen, die in der Innenwandung des Gehäuses 16 ausgebildet sind, können die Funktion von derartigen Stauelementen erfüllen. Derartige Nuten 103 sind beispielsweise in Fig. 8 eingezeichnet.

Die Stauelemente können in der Tasche 100 sowie in der weiteren Tasche 101 vorgesehen sein, wobei es zweckmäßig sein kann, wenn sich die Stauelemente 102, 103 über die gesamte Länge der Tasche 100 bzw. über die gesamte Länge der weiteren Tasche 101 erstrecken. Es ist allerdings auch möglich, dass, wie in Fig. 5 dargestellt, sich die Stauelemente nur über einen Teilbereich der Länge des Wandabschnittes 105 erstrecken. Die Stauelemente können mit dem Punkt 20 bzw. der Kante 20' beginnen und vor oder auf der Höhe des Punktes 110 enden, bei dem die Länge des Wandabschnittes 105 endet. Es ist auch möglich, dass sich die Stauelemente 102, 103 nur über einen Bereich erstrecken, der im Abstand vom Punkt 20 bzw. von der Kante 20' und auch im Abstand von Punkt 110 liegt.

Die Länge LS des jeweiligen Stauelements 102, 103 in der Tasche 100 kann 60 bis 100% von L %, vorzugsweise 75% bis 100%, von L, d.h. der Länge der Tasche, betragen, wobei L 0,8 bis 9 D, vorzugsweise 1 bis 7 D, beträgt. Das Stauelement 102, 103 beginnt vorteilhafterweise an dem in der Förderrichtung der Schnecke 6 stromabwärts gelegenen Rand 20' der Einzugsöffnung oder dem am weitesten stromabwärts gelegenen Punkt 20 der Einzugsöffnung. Es ist möglich, dass das Stauelement 2, 3 auch erst in einem vorgegebenen Abstand von diesem Punkt 20 bzw. vom Rand 20' beginnt. an dem in Förderrichtung 16 am meisten strömungsabwärts gelegenen Punkt 20 bzw. Rand 20' der Einzugsöffnung 80 beginnt.

Die Stauelemente 102, 103 können in beliebig geformten Querschnitt aufweisenden Taschen 100 und/oder Taschen 101 angeordnet bzw. ausgebildet sein. Wie in Fig. 6 und 8 dargestellt, besitzt der Wandabschnitt 105 sich in Förderrichtung 17 verjüngende Tasche, insbesondere konisch verjüngende Tasche, wogegen der Wandabschnitt 105, so wie er in den Fig. 5 und 7 dargestellt ist, eine im Wesentlichen parallel zur Förderrichtung 17 verlaufende Innenwandfläche besitzt. Gemäß Fig. 6 fluchten die Rippen 102 in der Tasche 100 und in der weiteren Tasche 101.

Ganz allgemein ist es von Vorteil, wenn die Stauelemente 102, 103 in der Tasche 100 und der weiteren Tasche 101 fluchtend angeordnet sind.

Gemäß Fig. 7 zeigt die Rippe 102 in der Tasche 100 und in der weiteren Tasche 101 über ihre Längserstreckung in Förderrichtung 17 abnehmenden Abstand von der Schnecke 6.

Es ist auch möglich, dass der Abstand zwischen den Stauelementen 102, 103 und der Hüllkurve der Schnecke 6 sich in Förderrichtung verringert oder konstant bleibt.

Für gewisse Anwendungszwecke kann es vorteilhaft sein, wenn sich das jeweilige Stauelement 102, 103 in Förderrichtung 17 parallel zur Achse der Schnecke 6 gerade erstreckt oder in Form einer Windung die Schnecke 6 längs ihres Umfanges umgibt, wobei die Steigung der Windung größer ist als die Steigung der Schnecke 6. Der Steigungswinkel der Stauelemente 102, 103 bezüglich der Förderrichtung 17 beträgt 0° bis 75°. Um die Schnecke 6 gewunden verlaufende Stauelemente 2, 3 sind in den Figuren nicht dargestellt.

Zur Überleitung von Material in die Schnecken 6, insbesondere im Bereich der dem Einzugsbereich nachfolgenden Tasche 100, ist es zweckmäßig, wenn die Rippe 102 oder der Schieber sich vorteilhafterweise radial in die Tasche 100 bzw. die weitere Tasche 101 erstreckt und eine Sperre für den Materialtransport um die Schnecke 6 herum darstellt.

Es ist möglich, dass die in der Tasche 100 vorgesehenen Stauelemente 102, 103 sich in die weitere Tasche 101 verlängern und somit durchgehende Stauelemente ausgebildet sind. Es ist des weiteren auch von Vorteil, wenn der Innenquerschnitt der weiteren Tasche 101 dem Querschnitt der Tasche 100 im Punkt 20 bzw. beim Rand 20' entspricht.

Es hat sich für die Praxis als zweckmäßig erwiesen, wenn die Anzahl A der Stauelemente 102, 103 im Wandabschnitt 105 und damit auch die Anzahl der Taschen 100 A = d/K beträgt, wobei d der Durchmesser der Schnecke 6 gemessen in mm und K ein Wert im Bereich von 10 bis 110, insbesondere von 15 bis 90, sind. Damit kann die für eine gute Materialbearbeitung erforderliche Anzahl der Stauelemente, verteilt über den Umfang des Wandabschnittes 105, für einen gegebenen Schneckendurchmesser bestimmt werden.

Es zeigte sich, dass durch die innerhalb des Wandabschnittes 105 vorgesehenen Stauelemente, vor allem aber durch Ausbildung einer Tasche 100 in diesem Bereich, eine für das Material bzw. für die Materialeigenschaften zuträgliche Zufuhr bzw. Einbringung in die Gänge der Schnecke 6 erfolgt. Dies wird durch die verbesserten Eigenschaften der bei der Austrittsöffnung der Schnecke 6 erhaltenen, bearbeiteten bzw. aufgeschmolzenen Materialien belegt. Auch die Richtung des von den Mischwerkzeugen 14 in die Einzugsöffnung 80 eingebrachten Materials wirkt mit der Wirkung der Tasche 100 positiv zusammen.

Für eine weitere Verbesserung der Materialeigenschaften ist es zweckmäßig, wenn zumindest ein Teilabschnitt des die Tasche 100 umfassenden Wandabschnittes 105 mit einer Kühleinheit 120 versehen ist, wobei vorteilhafterweise ein das Gehäuse 16 umgebender Kühlmantel und/oder Kühlkanäle in der Wand des Gehäuses 16 vorgesehen sind.

Der Aufbau der erfindungsgemäßen Vorrichtung wird vereinfacht, wenn der die Tasche 100 ausbildende Wandabschnitt 105 des Gehäuses 16 als in das Gehäuse 16 austauschbar einsetzbarer, vorzugsweise die Länge L besitzender, Gehäuseteil ausgebildet ist oder wenn die Tasche 100 in einer, vorzugsweise die Länge L besitzenden, Buchse ausgebildet ist, die in das Gehäuse 16 austauschbar einsetzbar ist. In diesem Fall kann mit nicht dargestellten Verbindungen der Wandabschnitt vom Punkt 20 bzw. von der Kante 20' bis zum Punkt 110 ausgebaut und durch einen anderen Wandabschnitt 105 mit entsprechenden Stauelementen 102, 103 ersetzt werden.

Die Ausbildung der Stauelemente 102, 103 wird unter anderem von den zu bearbeitenden bzw. zu fördernden Materialien bestimmt und hängt auch von der Zusammensetzung der Materialien bzw. den mit dem Material mitgeführten Verunreinigungen ab.

In dem dem Wandabschnitt 105 in Förderrichtung 17 folgenden Gehäuseabschnitt kann die Schnecke 6 bis zur Austrittsöffnung 30 beliebig in herkömmlicher Art, abhängig von der gewünschten Materialbearbeitung oder Materialbehandlung, ausgebildet sein.

Die Art und Weise, in welcher die Kühlung des Wandabschnittes 105 erfolgt, wird vom Fachmann gewählt; wesentlich ist die Möglichkeit, in diesem Bereich des Gehäuses 16 der Schnecke 6 eine Kühlung vornehmen zu können.

Die Schnecke 6 besitzt zumindest im Wandabschnitt 105, vorzugsweise über ihre gesamte Länge, einen konstanten Außen- und/oder Kerndurchmesser.

Die Übergänge vom Gehäuse 16 zu den Wandbereichen der Tasche 100 sind vorteilhaft gerundet ausgeführt; auch eine stufenförmige Ausbildung ist möglich.

## Patentansprüche

1. Vorrichtung zum Vorbehandeln und anschließenden Fördern, Plastifizieren oder Agglomerieren von Kunststoffen, insbesondere von thermoplastischem Abfallkunststoff zu Recyclingzwecken, mit einem Behälter (1) für das zu verarbeitende Material, wobei im Behälter (1) zumindest ein um eine Drehachse (10) drehbares umlaufendes Misch- und/oder Zerkleinerungswerkzeug (3) zur Mischung, Erwärmung und gegebenenfalls Zerkleinerung des Kunststoffmaterials angeordnet ist,
wobei in einer Seitenwand (9) des Behälters (1) im Bereich der Höhe des oder des untersten, bodennächsten Misch- und/oder Zerkleinerungswerkzeugs (3) eine Öffnung (8) ausgebildet ist, durch die das vorbehandelte Kunststoffmaterial aus dem Inneren des Behälters (1) ausbringbar ist,
wobei zumindest ein Förderer (5), insbesondere ein Extruder (5), zur Aufnahme des vorbehandelten Materials vorgesehen ist, mit zumindest einer in einem Gehäuse (16) rotierenden, insbesondere plastifizierenden oder agglomerierenden, Schnecke (6), wobei das Gehäuse (16) eine an seiner Stirnseite (7) oder in seiner Mantelwand liegende Einzugsöffnung (80) für das von der Schnecke (6) zu erfassende Material aufweist, und die Einzugsöffnung (80) mit der Öffnung (8) in Verbindung steht, wobei
die gedachte Verlängerung der zentralen Längsachse (15) des Förderers (5) oder der der Einzugsöffnung (80) nächstliegenden Schnecke (6) entgegen der Förderrichtung (17) des Förderers (5) an der Drehachse (10) ohne diese zu schneiden vorbeiführt, **dadurch gekennzeichnet, dass** die Längsachse (15) des Förderers (5) oder der der Einzugsöffnung (80) nächstliegenden Schnecke (6) ablaufseitig und in Dreh- bzw. Bewegungsrichtung (12) des Misch- und/oder Zerkleinerungswerkzeugs (3) zu der zur Längsachse (15) parallelen, von der Drehachse (10) des Misch- und/oder Zerkleinerungswerkzeugs (3) in Förderrichtung (17) des Förderers (5) nach außen gerichteten Radialen (11) des Behälters (1) um einen Abstand (18) versetzt ist, und dass
in dem an die Einzugsöffnung (80) in Förderrichtung (17) unmittelbar anschließenden Wandabschnitt (105) des Gehäuses (16), der die Schnecke (6) vollständig umgibt, eine Tasche (100) ausgebildet ist, die sich in Förderrichtung (17), beginnend mit dem stromabwärts gelegenen Rand (20') der Einzugsöffnung (80) oder dem am weitesten, stromabwärts gelegenen Punkt (20) der Einzugsöffnung (80), über eine Länge (L) von 0,8 d ≤ L ≤ 9 d, vorzugsweise 1 d ≤ L ≤ 7 d, erstreckt, wobei d der Außendurchmesser bzw. der Durchmesser der Hüllkurve der Schnecke (6) im Wandabschnitt (105) ist.

2. Vorrichtung nach Anspruch 1, **dadurch gekennzeichnet, dass** für einen mit dem Behälter (1) in Verbindung stehenden Förderer (5) das Skalarprodukt gebildet aus dem tangential zum Flugkreis des radial äußersten Punktes des Misch- und/oder Zerkleinerungswerkzeugs (3) bzw. tangential zu dem an der Öffnung (8) vorbeibewegten Kunststoffmaterial und normal zu einer Radialen (11) des Behälters (1) ausgerichteten, in Dreh- bzw. Bewegungsrichtung (12) des Misch- und/oder Zerkleinerungswerkzeugs (3) weisenden Richtungsvektor der Drehrichtung (19) und dem Richtungsvektor (17) der Förderrichtung des Förderers (5) in jedem einzelnen Punkt bzw. im gesamten Bereich der Öffnung (8) bzw. unmittelbar radial vor der Öffnung (8) null oder negativ ist.

3. Vorrichtung nach Anspruch 1 oder 2, **dadurch gekennzeichnet, dass** der Richtungsvektor der Drehrichtung (19) des radial äußersten Punktes des Misch- und/oder Zerkleinerungswerkzeugs (3) und der Richtungsvektor (17) der Förderrichtung des Förderers (5) einen Winkel (α) von größer oder gleich 90° und kleiner oder gleich 180° einschließen, gemessen im Schnittpunkt der beiden Richtungsvektoren (17,19) am bezüglich der Dreh- bzw. Bewegungsrichtung (12) des Misch- und/oder Zerkleinerungswerkzeugs (3) stromaufwärts gelegenen, zulaufseitigen Rand der Öffnung (8), insbesondere im am weitesten stromaufwärts gelegenen Punkt (20) auf diesem Rand bzw. der Öffnung (8),
und/oder
dass der Richtungsvektor (19) der Dreh- bzw. Bewegungsrichtung (12) und der Richtungsvektor (17) der Förderrichtung des Förderers (5) einen Winkel (β) zwischen 170° und 180° einschließen, gemessen im Schnittpunkt der beiden Richtungsvektoren (17,19) in der Mitte der Öffnung (8).

4. Vorrichtung nach einem der Ansprüche 1 bis 4, **dadurch gekennzeichnet, dass** der Abstand (18) größer als oder gleich groß wie der halbe Innendurchmesser des Gehäuses (16) des Förderers (5) bzw. der Schnecke (6) ist, und/oder größer gleich 7 %, vorzugsweise größer gleich 20 %, des Radius des Behälters (1) ist oder dass der Abstand (18) größer als oder gleich groß wie der Radius des Behälters (1) ist,
oder
dass die gedachte Verlängerung der Längsachse (15) des Förderers (5) entgegen der Förderrichtung nach Art einer Sekante zum Querschnitt des Behälters (1) angeordnet ist und den Innenraum des Behälters (1) zumindest abschnittsweise durchsetzt,
oder
dass der Förderer (5) tangential an den Behälter (1) angeschlossen ist bzw. tangential zum Querschnitt des Behälters (1) verläuft bzw. dass die Längsachse (15) des Förderers (5) bzw. der Schnecke (6) bzw. die Längsachse der der Einzugsöffnung (80) nächstliegenden Schnecke (6) oder die Innenwandung des Gehäuses (16) oder die Umhüllende der Schecke (6) tangential zur Innenseite der Seitenwand (9) des Behälters (1) verläuft, wobei vorzugsweise die Schnecke (6) an ihrer Stirnseite (7) mit einem Antrieb verbunden ist und an ihrem gegenüberliegenden Stirnende zu einer am Stirnende des Gehäuses (16) angeordneten Austrittsöffnung, insbesondere einem Extruderkopf, fördert.

5. Vorrichtung nach einem der Ansprüche 1 bis 4, **dadurch gekennzeichnet, dass** die Öffnung (8) unmittelbar und direkt und ohne wesentliche Beabstandung, insbesondere ohne Übergabestrecke oder Förderschnecke, mit der Einzugsöffnung (80) verbunden ist.

6. Vorrichtung nach einem der Ansprüche 1 bis 5, **dadurch gekennzeichnet, dass** das Misch- und/oder Zerkleinerungswerkzeug (3) Werkzeuge und/oder Messer (14) umfasst, die in Dreh- bzw. Bewegungsrichtung (12) auf das Kunststoffmaterial zerkleinernd, schneidend und erwärmend einwirken, wobei die Werkzeuge und/oder Messer (14) vorzugsweise auf oder an einem, insbesondere parallel zur Bodenfläche (2), angeordneten, drehbaren Werkzeugträger (13), insbesondere einer Trägerscheibe (13), ausgebildet oder angeordnet sind,
und/oder
dass die auf das Kunststoffmaterial einwirkenden in Dreh- bzw. Bewegungsrichtung (12) weisenden vorderen Bereiche bzw. Vorderkanten (22) der Misch- und/oder Zerkleinerungswerkzeuge (3) oder der Messer (14) unterschiedlich ausgebildet, angestellt, gekrümmt und/oder angeordnet sind im Vergleich zu den in Dreh- bzw. Bewegungsrichtung (12) hinteren bzw. nachlaufenden Bereichen.

7. Vorrichtung nach einem der Ansprüche 1 bis 6, **dadurch gekennzeichnet, dass** der Behälter (1) im wesentlichen kreiszylindrisch mit einer ebenen Bodenfläche (2) und einer dazu vertikal ausgerichteten zylindermantelförmigen Seitenwand (9) ausgebildet ist und/oder die Drehachse (10) der Misch- und/oder Zerkleinerungswerkzeuge (3) mit der zentralen Mittelachse des Behälters (1) zusammenfällt und/oder die Drehachse (10) oder die zentrale Mittelachse vertikal und/oder normal zur Bodenfläche (2) ausgerichtet sind,
und/oder
dass der unterste Werkzeugträger (13) bzw. das unterste der Misch- und/oder Zerkleinerungswerkzeuge (3) und/oder die Öffnung (8) bodennah in geringem Abstand zur Bodenfläche (2), insbesondere im Bereich des untersten Viertels der Höhe des Behälters (1), vorzugsweise in einem Abstand zur Bodenfläche (2) von 10 mm bis 400 mm angeordnet sind,
und/oder
dass der Förderer (5) ein Einzelschneckenextruder (6) mit einer einzigen komprimierenden Schnecke (6) ist oder ein Doppel- oder Mehrfachschneckenextruder ist, wobei die Durchmesser d der einzelnen Schnecken (6) untereinander gleich groß sind.

8. Vorrichtung nach einem der Ansprüche 1 bis 7, **dadurch gekennzeichnet, dass** im Gehäuse (16) im Bereich längs der Einzugsöffnung (80) eine weitere Tasche (101) ausgebildet ist.

9. Vorrichtung nach einem der Ansprüche 1 bis 8, **dadurch gekennzeichnet, dass** in der Tasche (100) und gegebenenfalls in der weiteren Tasche (101) zumindest ein den Materialfluss in Förderrichtung (16) bzw. die Materialeinbringung in die Schnecke (6) unterstützendes Stauelement (102, 103), in Form einer Rippe oder eines Schiebers (102) oder einer Wandnut (103), angeordnet bzw. ausgebildet ist,
und/oder
dass sich das Stauelement (102, 103) über die gesamte Länge der Tasche (100) oder über die gesamte Länge der weiteren Tasche (101) erstreckt,
und/oder
dass die Länge (LS) des jeweiligen Stauelements (102, 103) in der Tasche (100) 60% bis 100% von L, vorzugsweise 75% bis 100%, von L beträgt, und vorzugsweise das Stauelement (2, 3) sich in Förderrichtung (16) ab dem stromabwärts gelegenen Rand (20') der Einzugsöffnung (80) oder dem am weitesten stromabwärts gelegenen Punkt (20) der Einzugsöffnung (80) erstreckt.

10. Vorrichtung nach einem der Ansprüche 1 bis 17, **dadurch gekennzeichnet, dass** die Innenwandfläche des Wandabschnittes (105) zylindrisch ausgebildet ist oder sich in Förderrichtung (16), insbesondere konisch, verengt.

11. Vorrichtung nach einem der Ansprüche 1 bis 12, **dadurch gekennzeichnet, dass** der Abstand zwischen der Rippe oder dem Schieber (102) von der Hüllkurve der Schnecke (6) in der Tasche (100) und/oder in der weiteren Tasche (101) konstant ist oder sich der Abstand in der Tasche (100) und/oder der weiteren Tasche (101) die Rippe oder der Schieber der Hüllkurve der Schnecke (6) verändert, insbesondere sich in Förderrichtung verringert.

12. Vorrichtung nach einem der Ansprüche 1 bis 13, **dadurch gekennzeichnet, dass** sich das jeweilige Stauelement (102, 103) in Förderrichtung (17) parallel zur Achse der Schnecke (6) gerade erstreckt oder in Form einer Windung die Schnecke (6) längs ihres Umfanges umgibt, wobei die Steigung der Windung größer ist als die Steigung der Schnecke (6).

13. Vorrichtung nach einem der Ansprüche 1 bis 12, **dadurch gekennzeichnet, dass** die Rippe (102) oder der Schieber sich radial in das Gehäuse (16) hinein erstreckt.

14. Vorrichtung nach einem der Ansprüche 1 bis 13, **dadurch gekennzeichnet, dass** zumindest eines der in der Tasche (100) des Wandabschnittes (105) vorgesehenen Stauelemente (102, 103) in die weitere Tasche (101) verlängert ist.

15. Vorrichtung nach einem der Ansprüche 1 bis 14, **dadurch gekennzeichnet, dass** der Innenquerschnitt der weiteren Tasche (101) dem Querschnitt der Tasche (100) im Punkt (20) bzw. beim Rand (20') entspricht.

16. Vorrichtung nach einem der Ansprüche 1 bis 15, **dadurch gekennzeichnet, dass** die Anzahl (A) der Stauelemente (102, 103) im Wandabschnitt (105) und damit auch die Anzahl der Taschen (100) A = d/K beträgt, wobei d der Durchmesser der Schnecke (6) gemessen in mm und K ein Wert im Bereich von 10 bis 110, insbesondere von 15 bis 90, sind,
und/oder
dass das Füllvolumen (V) der Tasche (100) pro Längeneinheit V = k Vs beträgt, wobei k ein Wert im Bereich von 0,025 bis 2, vorzugsweise von 0,05 bis 1,5, ist und Vs das Füllvolumen der Schnecke (6) pro Längeneinheit ist.

17. Vorrichtung nach einem der Ansprüche 1 bis 16, **dadurch gekennzeichnet, dass** der Steigungswinkel der Stauelemente (102, 103) bezüglich der Förderrichtung (17) 0° bis 75° beträgt.

18. Vorrichtung nach einem der Ansprüche 1 bis 26, **dadurch gekennzeichnet, dass** die Schnecke (6) zumindest im Bereich der Tasche (100) eine Extruderschnecke mit konstantem Kerndurchmesser ist.

19. Vorrichtung nach einem der Ansprüche 1 bis 18, **dadurch gekennzeichnet, dass** zumindest ein Teilabschnitt des die Tasche (100) umfassenden Wandabschnittes (105) mit einer Kühleinheit (120) versehen ist, wobei vorteilhafterweise ein das Gehäuse (16) umgebender Kühlmantel und/oder Kühlkanäle in der Wand des Gehäuses (16) vorgesehen sind,
und/oder
dass der die Tasche (100) ausbildende Wandabschnitt (105) des Gehäuses (16) als in das Gehäuse (16) austauschbar einsetzbarer, vorzugsweise die Länge L besitzender, Gehäuseteil ausgebildet ist oder dass die Tasche (100) in einer, vorzugsweise die Länge L besitzenden, Buchse ausgebildet ist, die in das Gehäuse (16) austauschbar einsetzbar ist.

## Claims

1. Apparatus for the pretreatment and subsequent conveying, plastification or agglomeration of plastics, in particular of thermoplastics waste for recycling purposes, with a container (1) for the material to be processed, where the arrangement has, in the container (1), at least one mixing and/or comminution implement (3) which rotates around an axis (10) of rotation and which is intended for the mixing, heating and optionally comminution of the plastics material,
where an aperture (8) through which the pretreated plastics material can be removed from the interior of the container (1) is formed in a side wall (9) of the container (1) in the region of the level of the, or of the lowest, mixing and/or comminution implement (3) that is closest to the base,
where at least one conveyor (5), in particular one extruder (5), is provided to receive the pretreated material, and has at least one screw (6) which rotates in a housing (16) and which in particular has plastifying or agglomerating action, where the housing (16) has, located at its end (7) or in its jacket wall, an intake aperture (80) for the material to be received by the screw (6), and there is connection between the intake aperture (80) and the aperture (8), where the imaginary continuation of the central longitudinal axis (15) of the conveyor (5) or of the screw (6) closest to the intake aperture (80), in a direction opposite to the direction (17) of conveying of the conveyor (5), passes, and does not intersect, the axis (10) of rotation, **characterized in that**, on the outflow side or in the direction (12) of rotation or of movement of the mixing and/or comminution implement (3), there is an offset distance (18) between the longitudinal axis (15) of the conveyor (5) or of the screw (6) closest to the intake aperture (80), and the radius (11) that is associated with the container (1) and that is parallel to the longitudinal axis (15) and that proceeds outwards from the axis (10) of rotation of the mixing and/or comminution implement (3) in the direction (17) of conveying of the conveyor (5), and **in that** in the wall section (105) that is part of the housing (16) and that immediately follows the intake aperture (80) in the direction (17) of conveying and that completely surrounds the screw (6), there is a pocket (100) which extends in the direction (17) of conveying, starting at the downstream edge (20') of the intake aperture (80) or at the furthest downstream point (20) of the intake aperture (80), over a length (L), where 0.8 d ≤ L ≤ 9 d, preferably 1 d ≤ L ≤ 7 d, where d is the external diameter or the diameter of the envelope curve of the screw (6) in the wall section (105).

2. Apparatus according to Claim 1, **characterized in that**, for a conveyor (5) in contact with the container (1), the scalar product of the direction vector that is associated with the direction (19) of rotation and that is tangential to the circle described by the radially outermost point of the mixing and/or comminution implement (3) or that is tangential to the plastics material transported past the aperture (8) and that is normal to a radial (11) of the container (1), and that points in the direction (12) of rotation or of movement of the mixing and/or comminution implement (3) and of the direction vector (17) that is associated with the direction of conveying of the conveyor (5) at each individual point or in the entire region of the aperture (8) or immediately radially prior to the aperture (8) is zero or negative.

3. Apparatus according to Claim 1 or 2, **characterized in that** the angle (α) included between the direction vector that is associated with the direction (19) of rotation of the radially outermost point of the mixing and/or comminution implement (3) and the direction vector (17) that is associated with the direction of conveying of the conveyor (5) is greater than or equal to 90° and smaller than or equal to 180°, measured at the point of intersection of the two direction vectors (17, 19) at the inflow-side edge that is associated with the aperture (8) and that is situated upstream in relation to the direction (12) of rotation or of movement of the mixing and/or comminution implement (3), in particular at the point (20) that is on the said edge or on the aperture (8) and is situated furthest upstream and/or that the angle (β) included between the direction vector (19) that is associated with the direction (12) of rotation or of movement and the direction vector (17) that is associated with the direction of conveying of the conveyor (5) is from 170° to 180°, measured at the point of intersection of the two direction vectors (17, 19) in the middle of the aperture (8).

4. Apparatus according to any of Claims 1 to 3, **characterized in that** the distance (18) is greater than or equal to half of the internal diameter of the housing (16) of the conveyor (5) or of the screw (6), and/or greater than or equal to 7%, preferably greater than or equal to 20%, of the radius of the container (1), or **in that** the distance (18) is greater than or equal to the radius of the container (1) or that the imaginary continuation of the longitudinal axis (15) of the conveyor (5) in a direction opposite to the direction of conveying is arranged in the manner of a secant in relation to the cross section of the container (1), and, at least in sections, passes through the space within the container (1) or that the conveyor (5) is attached tangentially to the container (1) or runs tangentially in relation to the cross section of the container (1), or **in that** the longitudinal axis (15) of the conveyor (5) or of the screw (6) or the longitudinal axis of the screw (6) closest to the intake aperture (80) runs tangentially with respect to the inner side of the side wall (9) of the container (1), or the inner wall of the housing (16) does so, or the enveloping end of the screw (6) does so, where it is preferable that there is a drive connected to the end (7) of the screw (6), and that the screw provides conveying, at its opposite end, to a discharge aperture which is in particular an extruder head and which is arranged at the end of the housing (16).

5. Apparatus according to any of Claims 1 to 4, **characterized in that** there is immediate and direct connection between the aperture (8) and the intake aperture (80), without substantial separation, in particular without transfer section or conveying screw.

6. Apparatus according to any of Claims 1 to 5, **characterized in that** the mixing and/or comminution implement (3) comprises implements and/or blades (14) which, in the direction (12) of rotation or of movement, have a comminuting, cutting and heating effect on the plastics material, where the implements and/or blades (14) are preferably arranged or formed on or at a rotatable implement carrier (13) which is in particular a carrier disc (13) and which is in particular arranged parallel to the basal surface (2) and/or that the manner of formation, set-up, curvature and/or arrangement of the frontal regions or frontal edges (22) that are associated with the mixing and/or comminution implements (3) or with the blades (14), act on the plastics material and point in the direction (12) of rotation or of movement, differs when comparison is made with the regions that, in the direction (12) of rotation or of movement, are at the rear or behind.

7. Apparatus according to any of Claims 1 to 6, **characterized in that** the container (1) is in essence cylindrical with circular cross section and with a level basal surface (2) and with, orientated vertically in relation thereto, a side wall (9) which has the shape of the jacket of a cylinder, and/or the axis (10) of rotation of the mixing and/or comminution implements (3) coincides with the central axis of the container (1), and/or the axis (10) of rotation or the central axis are orientated vertically and/or normally in relation to the basal surface (2) and/or that the lowest implement carrier (13) or the lowest of the mixing and/or comminution implements (3) and/or the aperture (8) are arranged close to the base at a small distance from the basal surface (2), in particular in the region of the lowest quarter of the height of the container (1), preferably at a distance of from 10 mm to 400 mm from the basal surface (2) and/or that the conveyor (5) is a single-screw extruder (6) with a single compression screw (6), or is a twin- or multiscrew extruder, where the diameters d of the individual screws (6) are all identical.

8. Apparatus according to any of Claims 1 to 7, **characterized in that**, in the housing (16), in the region along the intake aperture (80), there is a further pocket (101).

9. Apparatus according to any of Claims 1 to 8, **characterized in that**, in the pocket (100) and optionally in the further pocket (101), there is at least one retarding element (102, 103) which assists the flow of material in the direction (16) of conveying, or which assists the introduction of material into the screw (6), and which takes the form of a rib or of a displaceable element (102), or of a wall groove (103) and/or that the retarding element (102, 103) extends over the entire length of the pocket (100) or over the entire length of the further pocket (101) and/or that the length (LS) of the respective retarding element (102, 103) in the pocket (100) is from 60% to 100% of L, preferably from 75% to 100% of L, and the retarding element (2, 3) preferably extends in the direction (16) of conveying, starting from the downstream edge (20') of the intake aperture (80) or from the furthest downstream point (20) of the intake aperture (80).

10. Apparatus according to any of Claims 1 to 17, **characterized in that** the internal wall area of the wall section (105) is cylindrical or narrows in the direction (16) of conveying, in particular conically.

11. Apparatus according to any of Claims 1 to 12, **characterized in that** the distance between the rib or the displaceable element (102) and the envelope curve of the screw (6) in the pocket (100) and/or in the further pocket (101) is constant, or the distance between the rib or the displaceable element and the envelope curve of the screw (6) in the pocket (100) and/or in the further pocket (101) alters, in particular decreases in the direction of conveying.

12. Apparatus according to any of Claims 1 to 13, **characterized in that**, in the direction (17) of conveying, the respective retarding element (102, 103) extends in a straight line parallel to the axis of the screw (6), or, in the form of a helix, surrounds the screw (6) along the periphery thereof, where the pitch of the helix is greater than the pitch of the screw (6).

13. Apparatus according to any of Claims 1 to 12, **characterized in that** the rib (102) or the displaceable element extends radially into the housing (16).

14. Apparatus according to any of Claims 1 to 13, **characterized in that** at least one of the retarding elements (102, 103) provided in the pocket (100) of the wall section (105) is prolonged into the further pocket (101).

15. Apparatus according to any of Claims 1 to 14, **characterized in that** the internal cross section of the further pocket (101) corresponds to the cross section of the pocket (100) at the point (20) or at the edge (20').

16. Apparatus according to any of Claims 1 to 15, **characterized in that** the number (A) of the retarding elements (102, 103) in the wall section (105), and therefore also the number of the pockets (100) A = d/K, where d is the diameter of the screw (6) measured in mm and K is a value in the range from 10 to 110, in particular from 15 to 90 and/or that the capacity (V) of the pocket (100) per unit of length = k Vs, where k is a value in the range from 0.025 to 2, preferably from 0.05 to 1.5, and Vs is the capacity of the screw (6) per unit of length.

17. Apparatus according to any of Claims 1 to 16, **characterized in that** the helix angle of the retarding elements (102, 103) with respect to the direction (17) of conveying is from 0° to 75°.

18. Apparatus according to any of Claims 1 to 17, **characterized in that**, at least in the region of the pocket (100), the screw (6) is an extruder screw with constant core diameter.

19. Apparatus according to any of Claims 1 to 18, **characterized in that** at least a subsection of the wall section (105) surrounding the pocket (100) has a cooling unit (120), and it is advantageous here that, in the wall of the housing (16), there is a cooling jacket surrounding the housing (16), and/or there are cooling ducts and/orthat the wall section (105) that is part of the housing (16) and that forms the pocket (100) is a housing part that can be inserted exchangeably into the housing (16) and that preferably has the length L, or **in that** the pocket (100) is within a bushing which preferably has the length L and which can be inserted exchangeably into the housing (16).

## Revendications

1. Dispositif permettant le prétraitement et, ensuite, le transport, la plastification ou l'agglomération de matières plastiques, en particulier des déchets de matières thermoplastiques à des fins de recyclage, comportant un conteneur (1) pour le matériau à traiter, au moins un outil de brassage et/ou outil de concassage (3), apte à tourner autour d'un axe de rotation (10) et destiné à brasser, chauffer et, le cas échéant, à concasser la matière plastique, étant disposé dans le conteneur (1),
une ouverture (8), à travers laquelle la matière plastique prétraitée peut être évacuée hors de l'intérieur du conteneur (1), étant réalisée dans une paroi latérale (9) du conteneur (1), dans la zone à la hauteur de l'outil de brassage ou outil de concassage (3) le plus bas, le plus près du fond,
au moins un convoyeur (5), en particulier une extrudeuse (5), étant prévu pour recevoir le matériau prétraité, comportant au moins une vis transporteuse (6),en particulier pour plastifier ou agglomérer, tournant dans un carter (16), le carter (16) comportant une ouverture d'admission (80), située sur sa face frontale (7) ou dans sa paroi latérale, pour le matériau à saisir par la vis transporteuse (6), et ladite ouverture d'admission (80) communiquant avec l'ouverture (8),
le prolongement imaginaire de l'axe longitudinal (15) central du convoyeur (5) ou de la vis transporteuse (6) la plus proche de l'ouverture d'admission (80) passant devant l'axe de rotation (10) sans croiser celui-ci, dans le sens opposé au sens de transport (17) du convoyeur (5),
**caractérisé en ce que**
l'axe longitudinal (15) du convoyeur (5) ou de la vis transporteuse (6) la plus proche de l'ouverture d'admission (80) est décalé selon une distance (18) du côté sortie et dans le sens de rotation ou de mouvement (12) de l'outil de brassage et/ou outil de concassage (3) par rapport à la radiale (11) du conteneur (1), parallèle à l'axe longitudinal (15) et orientée vers l'extérieur à partir de l'axe de rotation (10) de l'outil de brassage et/ou outil de concassage (3) dans le sens de transport (17) du convoyeur (5), et **en ce que**
dans la portion de paroi (105) du carter (16), qui est directement adjacente à l'ouverture d'admission (80) dans le sens de transport (17) et qui entoure complètement la vis transporteuse (6), est réalisée une poche (100) qui s'étend dans le sens de transport (17) à partir du bord (20') aval de l'ouverture d'admission (80) ou à partir du point (20) de l'ouverture d'admission (80), situé le plus en aval, sur une longueur (L) de 0,8 d ≤ L ≤ 9 d, de préférence 1 d ≤ L ≤ 7 d, d étant le diamètre extérieur ou le diamètre de l'enveloppante de la vis transporteuse (6) dans la portion de paroi (105).

2. Dispositif selon la revendication 1, **caractérisé en ce que** pour un convoyeur (5) communiquant avec le conteneur (1), le produit scalaire, formé à partir du vecteur de direction du sens de rotation (19), orienté tangentiellement au cercle de rotation du point radialement le plus extérieur de l'outil de brassage et/ou outil de concassage (3) ou tangentiellement à la matière plastique déplacée au niveau de l'ouverture (8) et normalement à une radiale (11) du conteneur (1), et dirigé dans le sens de rotation ou de mouvement (12) de l'outil de brassage et/ou outil de concassage (3), et du vecteur de direction (17) du sens de transport du convoyeur (5) dans chaque point individuel ou dans toute la zone de l'ouverture (8) ou directement radialement devant l'ouverture (8), est nul ou négatif.

3. Dispositif selon la revendication 1 ou 2, **caractérisé en ce que** le vecteur de direction du sens de rotation (19) du point radialement le plus extérieur de l'outil de brassage et/ou outil de concassage (3) et le vecteur de direction (17) du sens de transport du convoyeur (5) forment un angle (α) supérieur ou égal à 90° et inférieur ou égal à 180°, mesuré au point d'intersection des deux vecteurs de direction (17, 19) au niveau du bord de l'ouverture (8), du côté admission, situé en amont par référence au sens de rotation ou de mouvement (12) de l'outil de brassage et/ou outil de concassage (3), en particulier dans le point (20) situé le plus loin en amont sur ce bord ou l'ouverture (8),
et/ou
**en ce que** le vecteur de direction (19) du sens de rotation ou de mouvement (12) et le vecteur de direction (17) du sens de transport du convoyeur (5) forment un angle (ß) entre 170° et 180°, mesuré au point d'intersection des deux vecteurs de direction (17, 19) au milieu de l'ouverture (8).

4. Dispositif selon l'une quelconque des revendications 1 à 3, **caractérisé en ce que** la distance (18) est supérieure ou égale à la moitié du diamètre intérieur du carter (16) du convoyeur (5) ou de la vis transporteuse (6), et/ou supérieure ou égale à 7 %, de préférence supérieure ou égale à 20 % du rayon du conteneur (1), ou **en ce que** la distance (18) est supérieure ou égale au rayon du conteneur (1),
ou
**en ce que** le prolongement imaginaire de l'axe longitudinal (15) du convoyeur (5) est disposé dans le sens opposé au sens de transport à la manière d'une sécante à la section transversale du conteneur (1) et traverse au moins par zones le volume intérieur du conteneur (1),
ou
**en ce que** le convoyeur (5) est raccordé tangentiellement au conteneur (1) ou s'étend tangentiellement à la section transversale du conteneur (1), ou **en ce que** l'axe longitudinal (15) du convoyeur (5) ou de la vis transporteuse (6) ou l'axe longitudinal de la vis transporteuse (6) la plus proche de l'ouverture d'admission (80) ou la paroi intérieure du carter (16) ou l'enveloppante de la vis transporteuse (6) s'étendent tangentiellement à la face intérieure de la paroi latérale (9) du conteneur (1), de préférence la vis transporteuse (6) étant reliée, au niveau de sa face frontale (7), à un système d'entraînement, et transportant, au niveau de son extrémité frontale opposée, vers une ouverture de sortie, en particulier une tête d'extrudeuse, située à l'extrémité frontale du carter (16).

5. Dispositif selon l'une quelconque des revendications 1 à 4, **caractérisé en ce que** l'ouverture (8) communique avec l'ouverture d'admission (80) immédiatement et directement et sans distance importante, en particulier sans distance de transition ou vis transporteuse de transport.

6. Dispositif selon l'une quelconque des revendications 1 à 5, **caractérisé en ce que** l'outil de brassage et/ou outil de concassage (3) comporte des outils et/ou des lames de coupe (14) qui agissent dans le sens de rotation ou de mouvement (12) sur la matière plastique en la concassant, la coupant et la chauffant, les outils et/ou les lames de coupe (14) étant réalisés ou disposés de préférence sur ou contre un porte-outil (13) rotatif, en particulier un disque de support (13), disposé en particulier parallèlement à la surface de fond (2),
et/ou
**en ce que** les zones avant ou bords avant (22), agissant sur la matière plastique et orientés dans le sens de rotation ou de mouvement (12), des outils de brassage et/ou outils de concassage (3) ou des lames de coupe (14) sont configurés, engagés, cintrés et/ou disposés différemment des zones arrière ou aval par référence au sens de rotation ou de mouvement (12).

7. Dispositif selon l'une quelconque des revendications 1 à 6, **caractérisé en ce que** le conteneur (1) a une forme sensiblement cylindrique circulaire avec une surface de fond (2) plane et une paroi latérale (9) en forme d'enveloppe cylindrique orientée verticalement à cette dernière, et/ou l'axe de rotation (10) des outils de brassage et/ou outils de concassage (3) coïncide avec l'axe médian central du conteneur (1), et/ou l'axe de rotation (10) ou l'axe médian central sont orientés verticalement et/ou normalement à la surface de fond (2),
et/ou
**en ce que** le porte-outil (13) le plus bas ou l'outil le plus bas des outils de brassage et/ou outils de concassage (3) et/ou l'ouverture (8) sont disposés à proximité du fond à faible distance de la surface de fond (2), en particulier dans la zone du quart inférieur de la hauteur du conteneur (1), de préférence à une distancede la surface de fond (2) de 10 mm à 400 mm,
et/ou
**en ce que** le convoyeur (5) est une extrudeuse à vis unique (6) avec une seule vis transporteuse (6) destinée à comprimer ou est une extrudeuse à deux vis ou à plusieurs vis, les diamètres d des différentes vis transporteuses (6) étant identiques les uns aux autres.

8. Dispositif selon l'une quelconque des revendications 1 à 7, **caractérisé en ce qu'**une poche (101) supplémentaire est réalisée dans le carter (16) dans la zone le long de l'ouverture d'admission (80).

9. Dispositif selon l'une quelconque des revendications 1 à 8, **caractérisé en ce que** dans la poche (100) et, le cas échéant, dans la poche (101) supplémentaire, est disposé ou réalisé un élément de refoulement (102, 103), sous la forme d'une nervure ou d'un coulisseau (102) ou d'une rainure de paroi (103), qui favorise le flux de matière dans le sens de transport (17) ou l'introduction de la matière dans la vis transporteuse (6),
et/ou
**en ce que** l'élément de refoulement (102, 103) s'étend sur toute la longueur de la poche (100) ou sur toute la longueur de la poche (101) supplémentaire,
et/ou
**en ce que** la longueur (LS) de l'élément de refoulement (102, 103) concerné dans la poche (100) mesure 60 % à 100 % de L, de préférence 75 % à 100 % de L, et de préférence l'élément de refoulement (2, 3) s'étend dans le sens de transport (16) à partir du bord (20') aval de l'ouverture d'admission (80) ou à partir du point (20) de l'ouverture d'admission (80), situé le plus en aval.

10. Dispositif selon l'une quelconque des revendications 1 à 17, **caractérisé en ce que** la surface de paroi intérieure de la portion de paroi (105) est cylindrique ou se rétrécit, de préférence en forme de cône, dans le sens de transport (16).

11. Dispositif selon l'une quelconque des revendications 1 à 12, **caractérisé en ce que** la distance entre la nervure ou le coulisseau (102) et l'enveloppante de la vis transporteuse (6) dans la poche (100) et/ou dans la poche (101) supplémentaire est constante, ou la distance dans la poche (100) et/ou dans la poche (101) supplémentaire entre la nervure ou le coulisseau et l'enveloppante de la vis transporteuse (6) varie, en particulier diminue dans le sens de transport.

12. Dispositif selon l'une quelconque des revendications 1 à 13, **caractérisé en ce que** l'élément de refoulement (102, 103) concerné s'étend dans le sens de transport (17) sous forme droite parallèlement à l'axe de la vis transporteuse (6) ou entoure sous la forme d'une spire la vis transporteuse (6) le long de sa périphérie, la pente de la spire étant supérieure à la pente de la vis transporteuse (6).

13. Dispositif selon l'une quelconque des revendications 1 à 12, **caractérisé en ce que** la nervure (102) ou le coulisseau s'étendent radialement vers l'intérieur du carter (16).

14. Dispositif selon l'une quelconque des revendications 1 à 13, **caractérisé en ce qu'**au moins l'un des éléments de refoulement (102, 103), prévus dans la poche (100) de la portion de paroi (105), est prolongé dans la poche (101) supplémentaire.

15. Dispositif selon l'une quelconque des revendications 1 à 14, **caractérisé en ce que** la section transversale intérieure de la poche (101) supplémentaire correspond à la section transversale de la poche (100) au niveau du point (20) ou au niveau du bord (20').

16. Dispositif selon l'une quelconque des revendications 1 à 15, **caractérisé en ce que** le nombre (A) d'éléments de refoulement (102, 103) dans la portion de paroi (105) et, de ce fait aussi, le nombre de poches (100) est égal à A = d/K, d étant le diamètre de la vis transporteuse (6) mesuré en mm et K étant une valeur dans la plage de 10 à 110, en particulier de 15 à 90,
et/ou
**en ce que** le volume de remplissage (V) de la poche (100) par unité de longueur est égal à V = k Vs, k étant une valeur dans la plage de 0,025 à 2, de préférence de 0,05 à 1,5, et Vs étant le volume de remplissage de la vis transporteuse (6) par unité de longueur.

17. Dispositif selon l'une quelconque des revendications 1 à 16, **caractérisé en ce que** l'angle d'inclinaison des éléments de refoulement (102, 103) par rapport au sens de transport (17) mesure 0° à 75°.

18. Dispositif selon l'une quelconque des revendications 1 à 26, **caractérisé en ce que** la vis transporteuse (6), au moins dans la zone de la poche (100), est une vis d'extrudeuse avec un diamètre de noyau constant.

19. Dispositif selon l'une quelconque des revendications 1 à 18, **caractérisé en ce qu'**au moins une sous-partie de la portion de paroi (105) comportant la poche (100) est munie d'une unité de refroidissement (120), de manière avantageuse, il est prévu une enveloppe de refroidissement entourant le carter (16) et/ou des canaux de refroidissement dans la paroi du carter (16),
et/ou
**en ce que** la portion de paroi (105), formant la poche (100), du carter (16) est réalisée sous la forme d'une partie du carter ayant de préférence la longueur L et pouvant être mise en place de manière amovible dans le carter (16), ou **en ce que** la poche (100) est réalisée dans uneboîte ayant, de préférence, la longueur L et pouvant être mise en place de manière amovible dans le carter (16).
